Europäisches Patentamt

(19) European Patent Office    .    (11) Numéro de publication: **0 053 212**

Office européen des brevets                               **B1**

(12)              **FASCICULE DE BREVET EUROPEEN**

(45) Date de publication du fascicule du brevet: **29.08.84**     (51) Int. Cl.³: **H 04 L 11/12**

(21) Numéro de dépôt: **80430025.9**

(22) Date de dépôt: **28.11.80**

(54) **Modem multi-canal et son utilisation dans un procédé et un système pour tester un réseau de communications à plusieurs niveaux.**

(43) Date de publication de la demande:
**09.06.82 Bulletin 82/23**

(45) Mention de la délivrance du brevet:
**29.08.84 Bulletin 84/35**

(84) Etats contractants désignés:
**DE FR GB IT**

(56) Documents cités:
**FR-A-2 408 953**
**US-A-3 883 690**
**US-A-4 055 808**
**US-A-4 112 264**

(73) Titulaire: **International Business Machines Corporation**
**Old Orchard Road**
**Armonk, N.Y. 10504 (US)**
㊽ **DE GB IT**

(73) Titulaire: **Compagnie IBM FRANCE**
**5 Place Vendôme**
**F-75000 Paris 1er (FR)**
㊽ **FR**

(72) Inventeur: **Cholat-Namy, Jean**
**9, rue du Printemps**
**F-06160 Juan-les-Pins (FR)**
Inventeur: **Huon, Simon**
**Chemin du Trastour**
**F-06330 Roquefort-les-Pins (FR)**
Inventeur: **Thirion, Philippe**
**3, rue Jules Gilly**
**F-06300 Nice (FR)**

(74) Mandataire: **de Pena, Alain**
**Compagnie IBM France Département de Propriété Industrielle**
**F-06610 La Gaude (FR)**

Courier Press, Leamington Spa, England.

# 0 053 212

**Description**

Domaine Technique

La présente invention concerne les systèmes de test des réseaux de communications, et plus particulièrement un modem multicanal perfectionné et son utilisation dans une procédé et une système pour tester sélectivement l'une des liaisons de données dans un réseau comprenant une liaison de premier niveau incluant deux moden multicanaux communiquant entre eux à travers un canal de transmission et plusieurs liaisons de données de second niveau la prologeant.

Etat de la Technique

L'utilisation d'applications de plus en plus extensives et du traitement de données distribué étant considérée comme un moyen pour perfectionner l'efficacité des systèmes de traitement de données, l'importance d'avoir des réseaux de communications de données sûrs croît de jour en jour. Cependant, les réseaux devenant de plus en plus étendus et complexes, la détermination des problèmes, et plus particulièrement la localisation de l'unité défaillante dans le réseau, devient de plus en plus difficile.

Le brevet US—A 4 055 808 décrit un système pour tester un réseau de communications s'étendant sur plusieurs sites. Le système de traitement de données qui contrôle le réseau est situé dans un site central dans lequel on trouve aussi plusieurs modems centraux attachés à ce système. Certains des modems centraux communiquant avec des modems éloignés à travers un site intermédiaire. Dans le site intermédiaire un modem fait l'interface avec la liaison site central — site intermédiaire et un modem associé fait l'interface avec la liaison site intermédiaire — site éloigné. Le test du réseau est commandé par une unité centrale de test située dans le site central et qui communique à travers les différents modems avec des unités de test intermédiaires situées dans les sites intermédiaires et des unités de test éloignés situées dans les sites éloignés. L'unité centrale de test transmet des mots de commande de test contenant l'adresse du site à tester et l'indication du test à effectuer. Si l'adresse correspond à celle d'un site intermédiaire, l'unité de test dans ce site commande le test spécifié dans la commande. Si l'adresse correspond à celle d'un site éloigné relié au site intermédiare, l'unité de test dans le site intermédiaire transfère la commande au site éloigné. Les mots de commande de test sont transmis en dehors de la bande de fréquence utilisée par les modems pour transmettre les données et chaque unité de test comprend un émetteur-récepteur approprié pour recevoir et transmettre les mot de commande.

La demande de brevet FR—A 2 408 953 décrit un système de contrôle pour un réseau comprenant un contrôler de communications auquel sont attachés des modems centraux reliés à des modems éloignés. Certains des modems éloignés sont reliés à des liaisons de second niveau à travers un contrôleur de communications éloigné. Une unité de test associée à chaque modem commande le test sous le contrôle de contrôleur de communications central qui lui transmet des commandes de test à travers une voie secondaire. Chaque unité de test comprend un émetteur-récepteur de voie secondaire. Les commandes de test à destination des modems des liaisons de second niveau leur parviennent à travers un dispositif de dérivation qui contourne le contrôler de communications éloigné.

La demande de brevet et le brevet précités illustrent les techniques générales utilisées pour tester des réseaux de communications pouvant comprendre un grand nombre de modems. Cependent, on voit apparaître aujourd'hui, à côté de ces réseaux de communications, des réseaux d'importance moyenne basés sur l'utilisation de modems dits multicanaux comme par exemple le modem IBM 3865. Les réseaux à modems multicanaux doivent bien sûr pouvoir être aussi testés. Cependent l'application à ces derniers réseaux des techniques générales de test brièvement décrites ci-dessus et dans lesquelles les commandes de test sont transmises par des voies autres que celles qu'utilisent les modems pour transmettre les données et qui donc nécessitent des unités de test appropriées pour traiter ces commandes, ferait perdre l'avantage de la simplicité des réseaux à modems multicanaux.

Exposé de l'Invention

Un objet de l'invention est de fournir un procéde et un système pour tester sélectivement l'une des liaisons de connées dans un réseau de communications dont le premier niveau de liaison est constitué par des modems multicanaux et dans lesquels, contrairement aux techniques de l'art antérieur, les commandes de test sont transmises par les voies qu'utilisent les modems pour transmettre les données, et dans lesquels aucune unité de test distincte n'est nécessaire.

Un autre objet de l'invention est de fournir un modem multicanal perfectionné adapté aux procédé et système de test de l'invention.

D'une manière générale, l'invention concerne un procéde pour tester un réseau de communications comprenant un premier et une second modems multicanaux communiquant entre-eux par un canal de transmissions, chacun d'eau ayant plusieurs jonctions d'entrée-sortie, et chaque jonction d'un modem étant associée à une jonction de l'autre modem. Selon le procéde de l'invention on applique une demande de test à une des jonctions du premier modem multicanal dans lequel, en répose, est généré un code de configuration de test identifiant la jonction à laquelle le demande de test a été appliquée. Le premier modem multicanal est mis en une configuration dite configuration de test telle que seule la jonction à laquelle la demande de test a été appliquée soit active, et on applique à cette

2

jonction une commande de test comprenant un indication du test à effectuer et une indicateur de niveau de liaison. Si cet indicateur désigne le niveau de liaison qui inclut le premier modem, celui-ci commande le test spécifié dans la commande de test. Si l'indicateur de niveau de liaison désigne un niveau de liaison autre que celui qui l'inclut, la commande de test et le code de configuration de test sont transmis au second modem multicanal. Celui-cei décode l'indicateur de niveau de liaison et s'il désigne un niveau de liaison autre que celui qui l'inclut, et se met en une configuration de test telle que seule sa jonction qui est associée à celle du premier modem qui a reçu la demande de test soit active, et applique la commande de test à sa jonction associée active.

Selon un aspect de l'invention, le code de configuration de test indentifie en outre le débit binaire de la commande de test.

L'invention propose aussi un système de test mettant en oeuvre le procédé ci-dessus.

L'invention propose aussi un modem multicanal perfectionné pour être utilisé dans les procédé et système de test ci-dessus.

D'autres objets, caractéristiques et avantages de la présente invention ressortiront mieux de l'exposé qui suit, fait en référence aux dessins annexés à ce texte, qui représentent un mode de réalisation préféré de celle-ci.

Brève Description des Figures

La figure 1 représente une configuration typique de réseaux de communications à deux niveaux incorporant l'invention.

La figure 2, constituée par les figures 2A et 2B, représente un exemple de réalisation du modem multicanal 6 de la figure 1 incorporant l'invention.

La figure 3, constituée par les figures 3A, 3B et 3C, représente un exemple de réalisation du modem multicanal 13 de la figure 1 incorporant l'invention.

La figure 4 représente un exemple de réalisation de la logique de sélection de TC 36 de la figure 2.

La figure 5 représente un exemple de réalisation de la logique de sélection de TD 42 de la figure 2.

La figure 6 représente un exemple de réalisation de la logique d'émission 56 de la figure 2.

La figure 7 représente un exemple de réalisation de la logique de réception 59 de la figure 2.

La figure 8 représente un exemple de réalisation de la logique de sélection de RFS 65 de la figure 2.

La figure 9 représente un exemple de réalisation de la logique de sélection de CD 66 de la figure 2.

Description détaillée de l'Invention

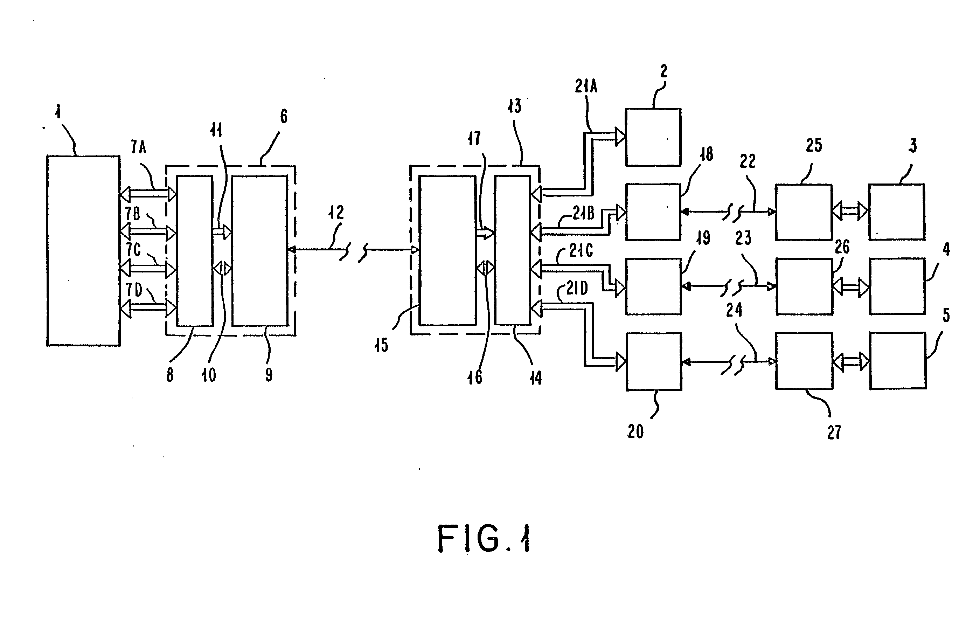

La figure 1 illustre une configuration typique de réseau à deux niveaux de liaison incorporant l'invention. Un équipement terminal de données (DTE) central 1, situé dans un site central, communique avec un DTE 2 situé dans un site intermédiaire et trois autre DTE référencés 3, 4 et 5 et situés dans des sites éloignés. Le DTE central 1 qui peut être par exemple un contrôleur de communications IBM 3705 est relié à un modem multicanal 6 par quatre jonctions de type V24 définies par le Comité Consultatif International Télégraphique et Téléphonique (CCITT), référencées 7A, 7B, 7C et 7D. Le modem multicanal 6 comprend un dispositif de multiplexage 8 qui est relié aux jonctions 7A à 7D et une partie modem proprement dit 9 qui est reliée au dispositif de multiplexage 8 par une jonction de type V24 10 et un bus 11. Le modem multicanal 6 peut être constitué, par exemple, par un modem IBM 3865 modifié de façon à incorporer l'invention comme il sera décrit plus loin.

Le modem multicanal 6 est relié à travers un canal de transmission 12 à un autre modem multicanal 13 situé dans le site intermédiare. Le modem multicanal 13 est semblable au modem multicanal 6 et comprend un dispositif de multiplexage 14 et une partie modem proprement dite 15 qui sont reliés entre eux par une jonction du type V24 16 et un bus 17. Le modem multicanal 13 et plus précisément son dispositif de multiplexage 14 est relié au DTE 2 et à trois modem maîtres 18, 19 et 20 par des jonctions du type V24, 21A, 21B, 21C et 21D. Le DTE 2 et les modems maîtres 18 à 20 sont situés dans le site intermédiaire. Les modems maîtres 18 et 20 sont reliés respectivement par des canaux de transmission 22, 23 et 24, à des modems éloignés 25, 26 et 27 qui sont respectivement attachés aux DTE 3, 4 et 5. Chacun des modems 25, à 27 est semblable à celui des modems 18 à 20 auquel il est relié. Les modems 18 à 20 et 25 à 27 peuvent être, par exemple, des modems IBM 3863 ou IBM 3864. On désigne souvent la liaison modem multicanal 6 — modem multicanal 13 par liaison de premier niveau et chacune des liaisons modem 18 — modem 25, moden 25 — modem 26 et modem 20 — modem 27 par "liaison de second niveau". L'homme de l'art comprendra que le réseau de la figure 1 n'est qu'illustratif, et que par exemple le DTE central 1 peut être remplacé par quatre DTE indépendants et attachés respectivement aux jonctions 7A et 7D.

En fonctionnement de mode de données, et de façon connue, le DTE central 1 peut transmettre simultanément quatre sous-canaux de données A, B, C et D à destination respectivement des DTE 2 à 5 à travers les jonctions 7A à 7D, et recevoir simultanément par ces quatre jonctions les données émises par les DTE 2 à 5. Si par exemple, les sous-canaux A à D ont chacun un débit binaire de 2400 bits par seconde (bps), ils seront multiplexes en un unique train de bits ayant un débit binaire de 9600 bps par le dispositif de multiplexage 8, et ce train de bits sera transmis sur le canal de transmission 12 par la partie modem 9. Le train de bits sera reçu par la partie modem 15 et démultiplexé en quatre sous-canaux par le dispositif 14. Le sous-canal A disponible à la jonction 21A, sera appliqué directement au DT2 2 alors que les sous-canaux B à D disponibles aux jonctions 21B à 21D, seront transmis aux DTE 3, 4 et 5 au moyen des modems 18 à 20 et 25 à 27 respectivement. Le DTE central 1 recevra les sous-canaux de données en provenance des DTE 2 à 5 de façon semblable. La configuration de multiplexage, c'est-à-dire le nombre de sous-canaux actifs et leur débit peut bien sûr varier comme par exemple indiqué dans l'Avis V29 du CCITT.

En fonctionnement en mode de test, le DTE central 1 commande le test du réseau conformément à l'invention et comme exposé tout d'abord brièvement ci-dessous. Lorsque le DTE central 1 désire tester l'un des sous-canaux de données, par exemple le sous-canal B, il envoie une demande de test au modem multicanal 6 à travers la jonction 7B. Lorsque le modem multicanal 6 reconnaît cette demande de test, il inhibe les sous-canaux A, C et D et se prépare à recevoir une commande de test par la jonction 7B. Lorsque le modem est prêt, il en informe le DTE central 1 qui en réponse lui transfère une commande de test à travers la jonction 7B, avec le débit binaire que le sous-canal B avait utilisé dernièrement en fonctionnement mode de données. La commande de test est stockée dans le modem multicanal 6. Cette commande contient un bit d'identification de niveau de liaison qui indique si la commande de test est pour la liaison du premier niveau, c'est-à-dire la liaison modem 6 — modem 13, ou pour la liaison de second niveau qui prolonge le sous-canal B, c'est-à-dire la liaison modem 18 — modem 25.

Le modem multicanal 6 décode le bit d'identification de niveau de liaison et si le test est pour la liaison de premier niveau, il effectue le test spécifié dans la commande de test et transfère le résultat du test au DTE central 1 à travers la jonction 7B. Si le test est pour la liaison de second niveau le modem multicanal 6 envoie au modem multicanal 13 avec un débit dit de service la commande de test qu'il a reçu du DTE central 1 comme s'il s'agissait d'une commande pour le premier niveau et concernant le modem multicanal 13, et un code de configuration de test spécifiant le sous-canal B et le débit de transmission à utiliser pour le test. Le modem multicanal 13 reconnaît qu'il reçoit un signal avec un débit de service, passe en mode de test et stocke la commande de test et le code de configuration de test reçus. Le modem multicanal 13 décode le bit indicateur de niveau de liaison, reconnaît qu'il s'agit d'une commande de test pour la liaison de second niveau et se comporte comme un DTE via-à-via de celle-ci. Il inhibe les sous-canaux A, C et D sur les jonctions 21A, 21C et 21D et transfère au modem maître 18 la commande de test qu'il a reçu du modem multicanal 6. Le modem maître 18 initie et effectue le test spécifié dans la commande de test et transfère le résultat du test au modem multicanal 13 comme si ce dernier était un DTE, et le modem multicanal 13 transfère ce résultat au DTE central 1 à travers les modems multicanaux 6 et 13 et la jonction 7B.

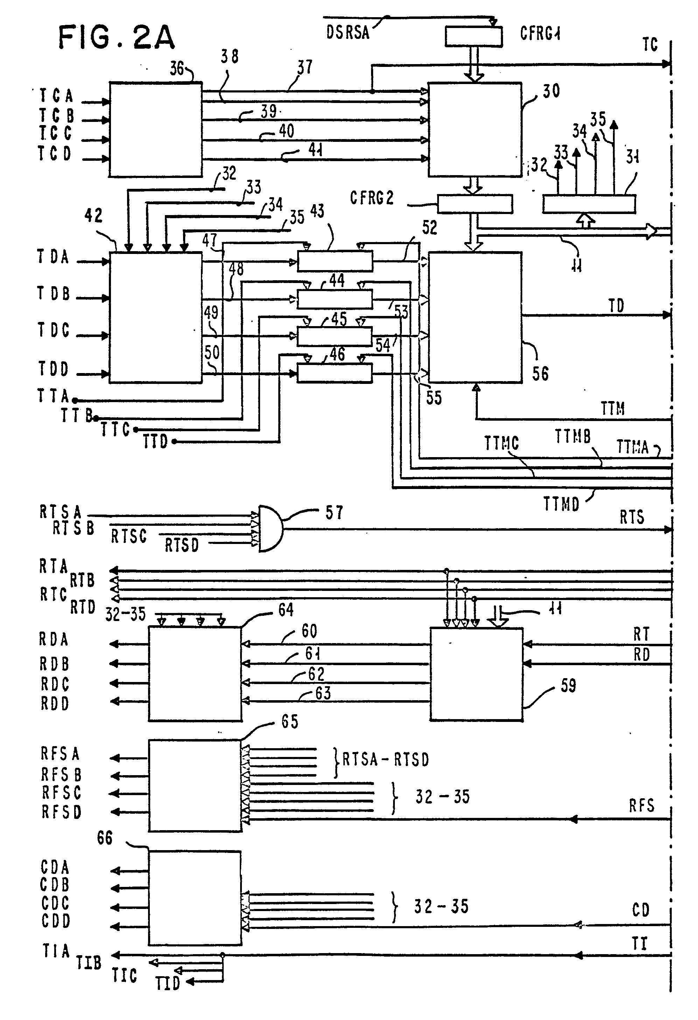

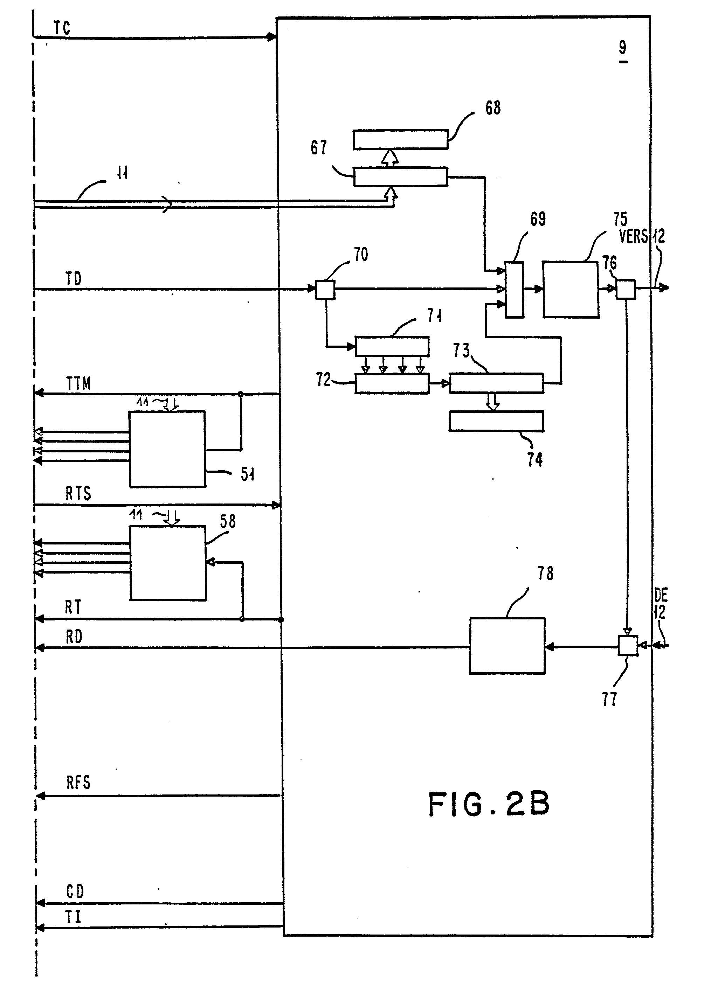

On décrira maintenant en détail l'invention en se référant tout d'abord à la figure 2 qui représente un exemple de réalisation du modem multicanal 6 incorporant l'invention. Sur cette figure, seuls les éléments nécessaires à l'invention ont été représentés.

Chacune des jonctions 7A à 7D et 10 comprend un certain nombre de lignes définies par l'Avis V 24 du CCITT et qui sont rappelées ci-dessous.

DSRS (Sélection du débit binaire)
Cette ligne est utilisée par le DTE pour sélectionner le débit binaire du modem.

TD (Emission des données)
Les données issues du DTE et à transmettre sont transférées au modem par cette ligne.

TT (Horloge émission — DTE)
Les signaux d'horloge d'émission fournis par le DTE sont transférés au modem par cette ligne.

RTS (Demande pour émettre)
Cette ligne est utilisée par le DTE pour mettre le modem en étant d'émettre.

TC (Commande de test)
C'est au moyen de cette ligne que le DTE indique au modem de passer en mode de test.

RD (Réception des données)
Les données reçues par le modem sont transférées au DTE par cette ligne.

TTM (Horloge émission-modem)
Les signaux d'horloge d'émission fournis par le modem sont transférés au DTE par cette ligne.

RT (Horloge réception)
Le modem transfère les signaux d'horloge de réception au DTE par cette ligne.

**0 053 212**

RFS (Prêt à émettre)
C'est au moyen de cette ligne que le modem indique au DTE qu'il est prêt à émettre.

CD (Détection signal)
Cette ligne est utilisée par le modem pour indiquer au DTE que le signal reçu du canal de transmission est conforme aux limites appropriées.

TI (Indicateur de test)
C'est au moyen de cette ligne que le modem indique au DTE qu'il est en mode de test.
Sur le figure 2, on a identifié les lignes de la jonction 10 par les abréviations ci-dessus, et celles des jonctions 7A, 7B, 7C et 7D en y accolant respectivement les suffixes A, B, C et D. Le dispositif de multiplexage 8 comprend un registre de configuration CFRG1 ayant trois positions de bit dont celle de droite sur la figure est connectée à la ligne DSRSA de la jonction 7A et les deux autres sont chargées à partir, par exemple, d'un sélecteur de configuration (non représenté) situé sur le panneau opérateur du modem multicanal 6. Les trois positions de bit du registre CFRG1 sont reliées à un générateur de code de configuration 30 dont la sortie est appliquée à un autre registre de configuration CFRG2 comprenant quatre positions de bit reliées au bus 11. Le bus 11 est appliqué à un décodeur 31 ayant quatre sorties reliées respectivement à des lignes de sélection 32, 33, 34 et 35. Le décodeur 31 lève sélectivement une ou plusieurs des lignes 32 à 35 en fonction du code qu'il reçoit par le bus 11, conformément au tableau I ci-dessous:

TABLEAU I

| Code | Lignes levées |
|------|---------------|
| 1000 | 32 |
| 1001 | 32 |
| 1010 | 32 |
| 1011 | 33 |
| 1101 | 33 |
| 1110 | 34 |
| 1111 | 35 |
| 0001 | 32 |
| 0011 | 32, 33 |
| 0101 | 32, 33, 34 |
| 0111 | 32, 33, 34, 35 |
| 0000 | 32 |
| 0010 | 32, 33 |

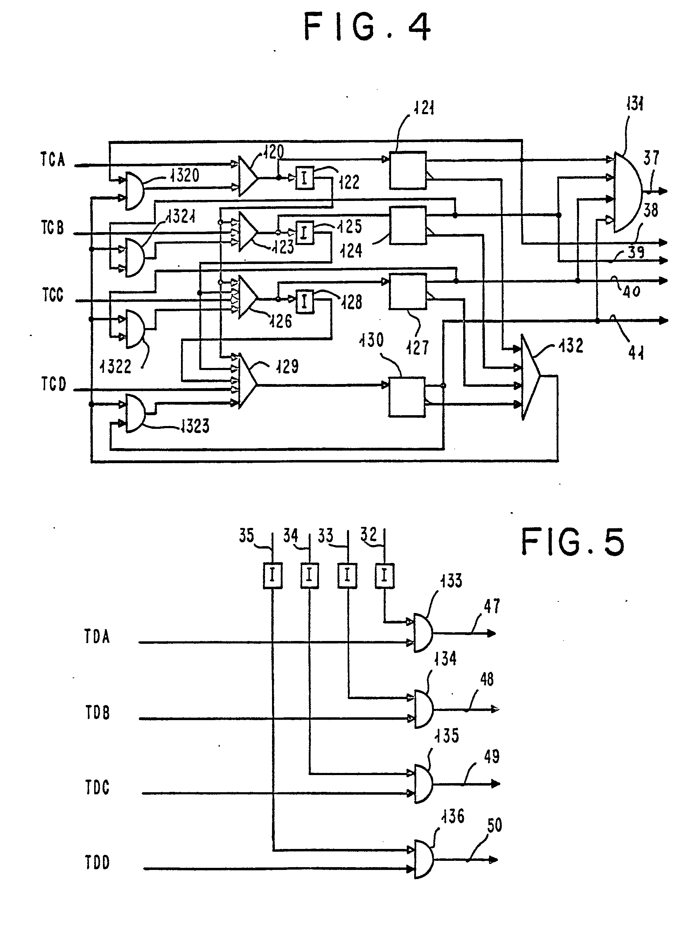

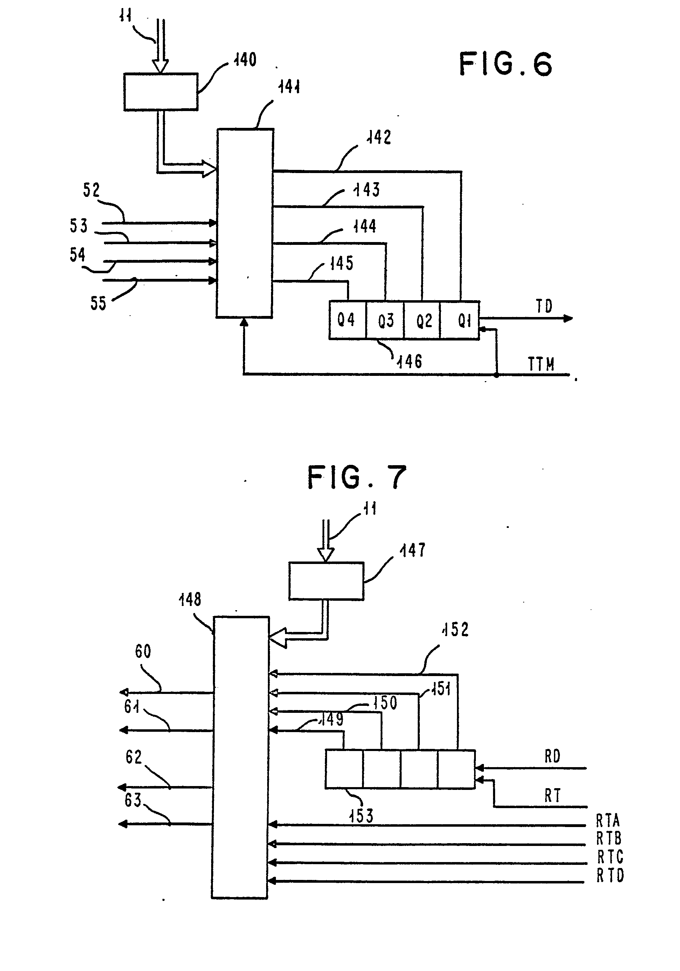

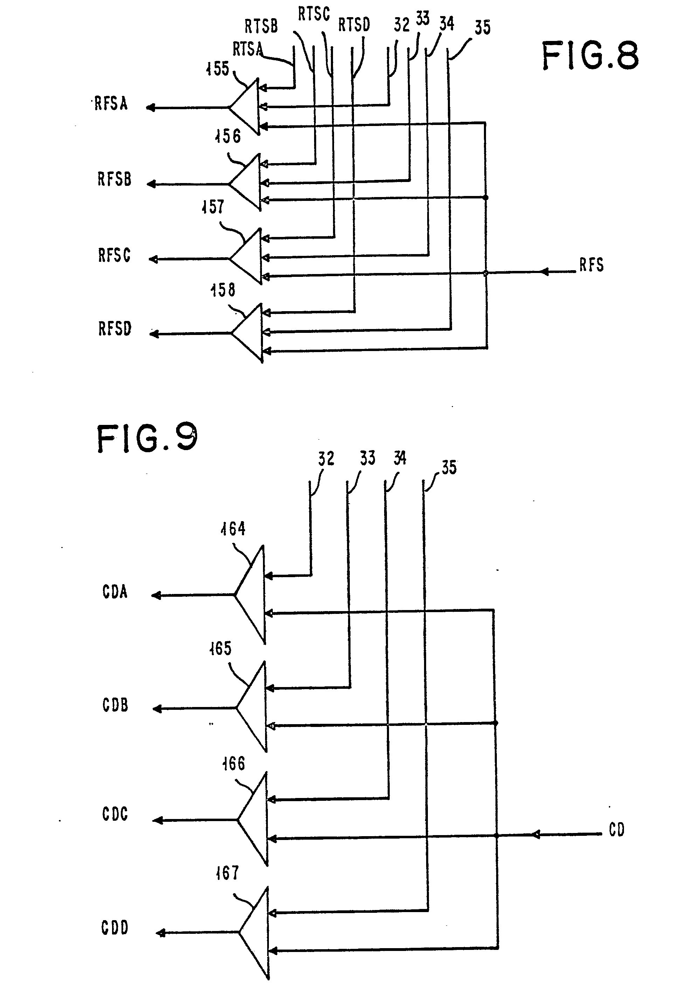

Les lignes TCA à TCD des jonctions 7A à 7D sont reliées à une logique de sélection de TC 36 qui sera décrite en détail en référence à la figure 4. La logique 36 a cinq sorties reliées au générateur de code de configuration 30 par des lignes 37, 38, 39, 40 et 41. La ligne 37 est reliée à la ligne TC de la jonction 10. Les lignes TDA à TDD des jonctions 7A à 7D et les lignes 32 à 35 sont reliées à un logique de sélection de TD 42 qui sera décrite en détail en référence à la figure 5 et qui a quatre sorties reliées respectivement à quatre registres tampons élastiques 43, 44, 45 et 46 par des lignes 47, 48, 49 et 50. On trouvera un exemple de réalisation de registre tampon élastique dans la publication "IBM Technical Disclosure Bulletin", Vol. 22, No. 10, mars 1980, pages 4597 à 4599. Les registres 43 à 46 reçoivent aussi respectivement les lignes TTA à TTD et les lignes TTMA à TTMD. Ces dernières proviennent d'un diviseur de fréquence programmable 51 qui divise la fréquence des signaux d'horloge sur la ligne TTM de la jonction 10 en fonction du contenu du registre CFRG2 qu'il reçoit par le bus 11. Les sorties des

5

registres tampons élastiques 43 à 46 sont appliquées respectivement par des lignes 52, 53, 54 et 55 à une logique d'émission 56 qui reçoit aussi le bus 11 et la ligne TTM et qui a sa sortie reliée à la ligne TD de la jonction 10. La logique d'émission 56 sera décrite en détail en référence à la figure 6. Les lignes RTSA à RTSD des jonctions 7A à 7D sont appliquées à une porte OU 57 dont la sortie est reliée à la ligne RTS de la jonction 10. Les lignes TIA à TID des jonctions 7A à 7D sont connectées à la ligne TI de la jonction 10. La ligne RT de la jonction 10 est appliquée à un diviseur de fréquence programmable 58 qui est semblable au diviseur de fréquence 51 et qui reçoit le bus 11 et a quatre sorties reliées respectivement aux lignes RTA à RTD des jonctions 7A à 7D. Les lignes RD et RT de la jonction 10, le bus 11 et les lignes RTA à RTD sont reliées à une logique de réception 59 qui sera décrite en détail en référence à la figure 7, et qui a quatre sorties reliées respectivement à des lignes 60, 61, 62 et 63. Les lignes 60 à 63 et les lignes 32 à 35 sont reliées à une logique de sélection de RD 64 similaire à la logique de sélection de TD 42 et qui a quatre sorties reliées aux lignes RDA à RDD des jonctions 7A à 7D. La ligne RFS de la jonction 10, les lignes RTSA à RTSD et les lignes 32 à 35 sont reliées à une logique de sélection de RFS 65 qui a quatre sorties reliées aux lignes RFSA à RFSD des jonctions 7A à 7D, et qui sera décrite en détail en référence à la figure 8. La ligne CD de la jonction 10 et les lignes 32 à 35 sont reliées à une logique de sélection de CD 66 qui a quatre sorties reliées aux lignes CDA à CDD des jonction 7A à 7D et qui sera décrite en détail en référence à la figure 9.

Dans la partie modem 9, le bus 11 est relié à un registre à huit positions de bit 67 qui est relié à un décoder 68 et qui a une sortie série appliquée à une entrée d'une porte 69. La ligne TD est appliquée à l'entrée d'une porte 70 dont une sortie est appliquée à une autre entrée de la porte 69, et une autre sortie est appliquée à un registre d'entrée de commande de test 71 qui est reliée à une logique de sélection 72. La sortie de la logique de sélection 72 est reliée à un registre de commande de test 73 qui est relié à un décodeur 74 et qui a une sortie série appliquée à une autre entrée de la porte 69. La sortie de la porte 69 est appliquée aux circuits d'émission conventionnels du modem qu'on a représenté sur la figure par un bloc 75. La sortie des circuits d'émission 75 est reliée à l'entrée d'une porte 76 dont une sortie est appliquée au canal de transmission 12. Les signaux reçus du canal de transmission 12 sont appliqués à une entrée d'une porte 77 dont l'autre entrée est reliée à une autre sortie de la porte (76). La sortie de la porte 77 est appliquée aux circuits de réception conventionnels du modem qu'on a représenté sur la figure par un bloc 78. La sortie des circuits de réception 78 est reliée à la ligne RD. Les autres lignes de la jonction 10 sont reliées aux circuit d'interface conventionnels du modem qui n'ont pas été représentés sur la figure.

Dans l'exemple de réalisation de la figure 2, les sous-canaux A à D peuvent être combinés comme illustré dans le tableau II.

TABLEAU II

| Débit global | No. de configu-ration | Sous-canal actif | Débit/sous-canal | Affectation des bits dans le quadbit | | | |
|---|---|---|---|---|---|---|---|
| | | | | Q1 | Q2 | Q3 | Q4 |
| 9600 | 1 | A | 9600 | X | X | X | X |
| | 2 | A | 4800 | X | | X | |
| | | B | 4800 | | X | | X |
| | 3 | A | 4800 | X | | X | |
| | | B | 2400 | | X | | |
| | | C | 2400 | | | | X |
| | 4 | A | 2400 | X | | | |
| | | B | 2400 | | X | | |
| | | C | 2400 | | | X | |
| | | D | 2400 | | | | X |
| 4800 | 5 | A | 4800 | | X | X | |
| | 6 | A | 2400 | | X | | |
| | | B | 2400 | | | X | |

L'affectation des bits qui apparaît dans le tableau II sera décrite ultérierement en référence à la figure 6.

La configuration utilisée par le réseau est stockée sous forme codée dans le registre CFRG1. Le code utilisé est par exemple le suivant:

| CFRG1 | Numéro de la configuration |
|:-----:|:--------------------------:|
| 001 | 1 |
| 011 | 2 |
| 101 | 3 |
| 111 | 4 |
| 000 | 5 |
| 010 | 6 |

On décrirar maintenant brièvement le fonctionnement en mode de données du dispositif de la figure 2 en supposant que le réseau fonctionne avec la configuration No. 2, c'est-à-dire, avec le sous-canaux A et B actifs, chacun d'eux ayant un débit binaire de 4800 bps. La ligne DSRSA qui conditionne la valeur du bit le plus à droite du registre CFRG1 est haute, et celui-ci contient le code "011". (Les lignes DSRSB à DSRSD ne sont pas utilisées). Les lignes TCA à TCD sont basses, les lignes 37 et TC sont basses et en conséquence le générateur de code de configuration 30 force à "0" la valeur du bit le plus à gauche du CFRG2 et copie dans les trois autres positions de bit du CFRG2 le contenu du registre CFRG1. Le registre CFRG2 contient donc le code de configuration "0011". Les lignes RTSA, RTSB, RTS, RFS, RFSA et RFSB sont hautes. Les bits de données des sous-canaux A et B, disponibles sur les lignes TDA et TDB traversent la logique de sélection de TD 42 et sont chargés dans les registres tampons élastiques 43 et 44 à la cadence des signaux d'horloge sur les lignes TTA et TTB respectivement. Les bits de connées sont lus des registres tampons élastiques 43 et 44 sous le contrôle des signaux d'horloge sur les lignes TTMA et TTMB et appliqués à la logique d'émission 56. Les signaux sur les lignes TTMA et TTMB sont des signaux d'horloge à 4800 Hz dérivés directement des signaux d'horloge à 9600 Hz fournis par la partie modem 9 sur la ligne TTM. Les bits lus des registres 43 et 44 sont combinés de façon connue en groupe de quatre bits (quadbits) dans la logique d'émission 56 comme il sera décrit en détail en référence à la figure 6. Les bits de chacun des quadbits sont disponibles sur la ligne TD à la cadence de 9600 bps fixée par les signaux sur la ligne TTM. Le code de configuration "0011" est copié dans le registre 67 de la partie modem 9 et le décodeur 69 reconnaissant que le bit le plus à gauche de ce code a la valeur "0" indiquant un fonctionnement en mode de données, commande les portes 69 et 70 de façon à ce que les bits sur la ligne TD soient appliqués aux circuits d'émission 75 pour transmission à travers le canal de transmission 12. Les portes 76 et 77 sont commandées par le décodeur 68 de façon à ce que les circuits d'émission 75 soient déconnectés des circuits de réception 78. Le modem multicanal n'étant par en test les alignes TI, TIA à TID sont basses.

Lorsque le modem multicanal 6 reçoit des bits de données, les lignes CD, CDA et CDB sont hautes et les lignes CDC et CDD sont basses. Les bits de données reçus par la partie modem 9 sont appliquées par la ligne RD à la logique de réception 59 avec un débit de 9600 bps fixé par les signaux d'horloge sur la ligne RT. Dans la logique de réception 59, ces bits sont groupés en quadbits et les bits de chacun de ces quadbits sont distribués sur les lignes 60 et 61 sous le contrôle du contenu du registre CFRG2 et des signaux d'horloge à 4800 Hz sur les lignes RTA et RTB. Les bits sur les lignes 60 et 61 traversent la logique de sélection de RD 64 et sont appliqués au DTE central 1 par les lignes RDA et RDB respectivement.

Le test du réseau est initié par le DTE central 1. Pour cela, il envoie une demande de test au sous-canal à tester en faisant monter celle des lignes TCA à TCD qui correspond au sous canal à tester. En supposant que par exemple le DTE central désire tester le sous-canal B, il lèvera la ligne TCB. En réponse, la logique de sélection de TC lève la ligne 37, et en conséquence la ligne TC qui lui est connectée, verrouille la ligne 39 qui est représentative de celles des lignes TCA à TCD qui est montée, au niveau haut, et les lignes 38, 40 et 41 au niveau bas.

Le générateur de configuration 30 détecte que la ligne 37 est levée et génère un code de configuration de test pour emmagasinage dans le registre CFRG2 comme suit. Le générateur de configuration 30 force à "1" la position la plus à gauche du registre CFRG2 indiquant par là qu'il s'agit d'un code de configuration de test. Les trois autres bits à emmagasiner dans le registre CFRG2 représentent sous forme codée le sous-canal à tester et le débit à utiliser. Le générateur de configuration 30 obtient

7

# O 053 212

l'information sous-canal à tester en reconnaissant celle des lignes 38 à 41 qui est montée et l'information de débit à utiliser en reconnaissant dans le contenu du registre CFRG1 le débit que le sous-canal à tester avait utilisé en dernier en fonctionnement en mode de données. Dans l'exemple considéré, le générateur de configuration 30 génère le code de configuration de test "1011" qui indique "test du sous-canal B à 4800 bps" et qui extrait de la table suivante:

| Code | Configuration de test |
|------|----------------------|
| 1000 | Sous-canal A—9600 |
| 1001 | Sous-canal A—4800 |
| 1010 | Sous-canal A—2400 |
| 1011 | Sous-canal B—4800 |
| 1101 | Sous-canal B—2400 |
| 1110 | Sous-canal C—2400 |
| 1111 | Sous-canal D—2400 |

En réponse à l'état des lignes 32 à 35, la logique de sélection de TD force à "1" les lignes 47, 49 et 50, c'est-à-dire celles des lignes TDA à TDB qui ne correspondent pas au sous-canal à tester. En réponse à l'état des lignes 32 à 35 les logiques de sélection 65 et 66 verrouillent à l'état bas les lignes RFSA, RFSC et RFSD et les lignes CDA, CDC et CDD respectivement.

La partie modem 9 détecte que la ligne TC est montée et en réponse baisse la ligne RFS. La logique de sélection de RFS 65 laisse baisser alors la ligne RFSB. Le décodeur 68 décode le code de configuration de test contenu dans le registre 67 où il a été chargé par le bus 11, et la partie modem 9 est ainsi informée qu'elle va recevoir une commande à 4800 bps et se prépare à la recevoir, Lorsque la partie modem 9 est prête, elle fait monter la ligne RFS et la logique de sélection de RGS 65 laisse monter la ligne RFSB.

Le DTE central 1 détecte que la ligne RFSB est remontée et transfère au modem 6 par la ligne TDB une commande de test avec un débit de 4800 bps. Cette commande de test traverse la logique de sélection de TD 42, le registre tampon élastique 44, la logique d'émission 56 et est envoyée par la ligne TD à la partie modem 9 dans laquelle elle traverse la porte 70 commandée par le décodeur 68, le registre 71 et la logique de sélection 72 pour être stockée dans le registre de commande de test 73. Le fonctionnement du registre 71 et de la logique de sélection 72 sera décrit ultérieurement en référence à la figure 6.

Dans l'exemple de réalisation illustré sur la figure 2, la commande de test a le format de trame non séquentielle du type HDLC (de l'anglais High Level Data Link Control) qu'on illustré ci-dessous.

F, A, Contrôle, Cde de test, FCS, F

et qui comprend:
— un octet fanion (F) qui indique le début de la trame,
— un octet d'adresse (A) qui est l'adresse du modem destinataire,
— un octet de contrôle qui spécifie qu'il s'agit d'une commande de test,
— un octet de commande de test (Cde de test) qui spécifie le test,
— deux octets de séquence de contrôle de trame (FCS) qui permet au DTE adressé de vérifier si la trame reçue est en erreur ou non,
— un octet fanion (F) qui indique la fin de la trame.

La trame ci-dessus a un format connu et on pourra se référer par exemple aux normes internationale IS 3309 et IS 4335 et au document public "IBM Synchronous Data Link Control-General Information", Document No. GA 27-3093-2.

Cependent, l'octet de commande de test a une configuration spécifique à l'invention comme décrit ci-dessous.

Bit 1   Indicateur de niveau de la liaison à tester. Ce bit a la valeur "1" lorsque le test pour la liaison de second niveau.

Bits 2 à 4   Bits réservés pour des usages ultérieurs.

Bits 5 à 8   Bits de test.

Ces bits spécifient le type de test.

Les différents types de test peuvent être par exemple:
· Auto-test du modem local,
· Auto-test du modem éloigné,

**O 053 212**

· Rapport de l'état de modem local/éloigné,
· Test de boucle éloignée,
· Test de boucle locale, etc.
Le décodeur 74 décode la commande de test stockée dans le registre de commande de test 73. Deux cas peuvent se présenter.

PREMIER CAS: Le bit indicateur de niveau de liaison a la valeur "0", indiquant que le test est pour le premier niveau de liaison; le modem multicanal 6 ou le modem multicanal 13 ou les deux effectuent le test spécifié par la commande. On décrira ci-dessous deux exemples de test.

Premier exemple

La commande de test spécifie "test de boucle locale". Ce test correspond au test de la boucle 3 définie par l'Avis V54 du CCITT. Lorsque le décodeur 74 reconnaît cette commande, les circuits d'émission 75 et les circuits de réception 78 sont déconnectés du canal de transmission 12 et bouclés sur eux-mêmes à travers les portes 76 et 77. La commande de test stockée dans le registre 73 est retournée au DTE central 1 à travers la porte 69, les circuits d'émission 75, les portes 76 et 77, les circuits de réception 78, la ligne RD les logiques 59 et 64 et la ligne RDB. Le DTE central 1 envoie sur la ligne TDB une séquence de test qui est appliquée par la ligne TD à la partie modem 9 dans laquelle elle traverse les circuits d'émission 75 les circuits de réception 78, et est retournée au DTE central 1 par les lignes RD et RDB. La séquence reçue par le DTE central 1 sous la ligne RDB est analysée pour vérifier si elle est en erreur. Ce test en soi est connu et largement utilisé notamment par les modem IBM 3863, IBM 3864 et IBM 3865 et ne sera pas décrit plus en détail. La différence présentée par l'invention est que la séquence de test est appliquée au modem par la jonction 7B qui correspond au sous-canal à tester et est retournée au DTE central par cette même jonction.

Second exemple

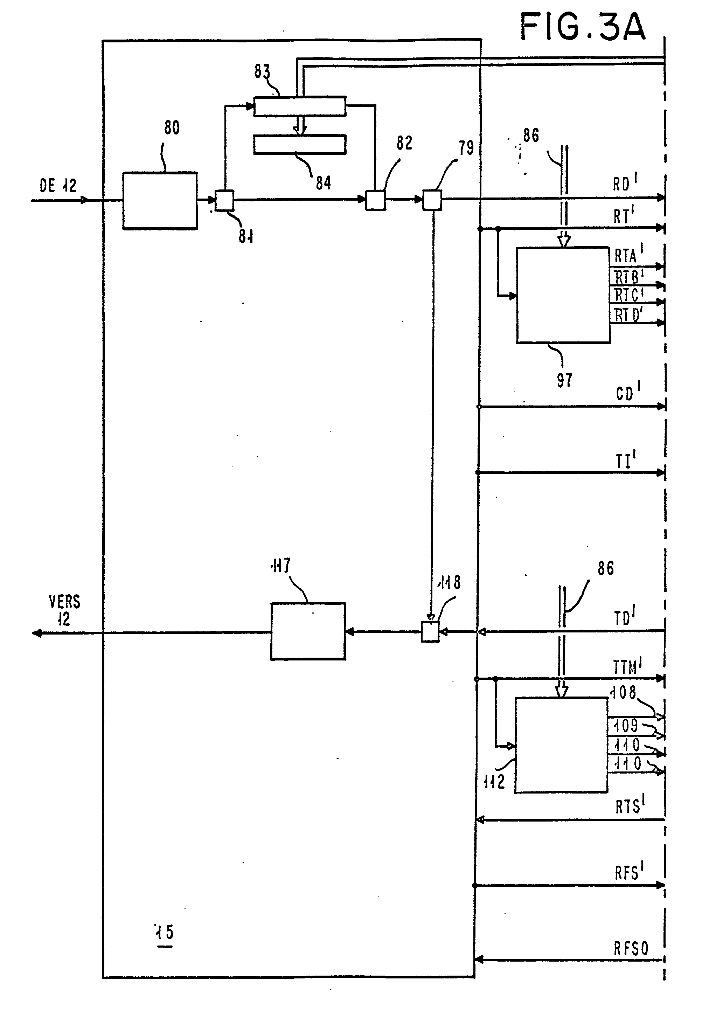

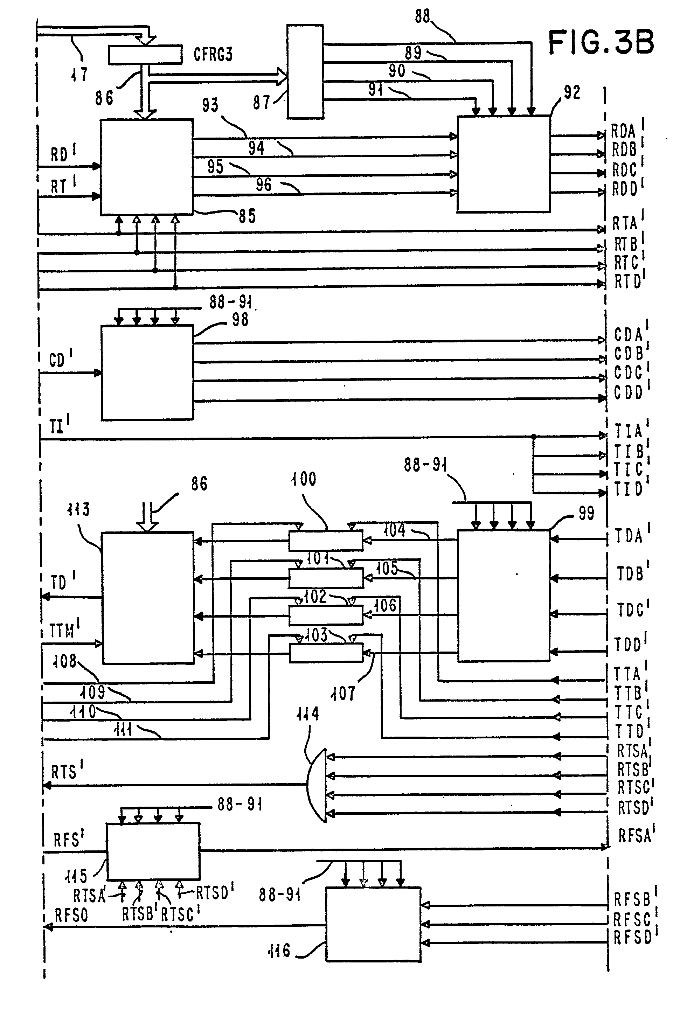

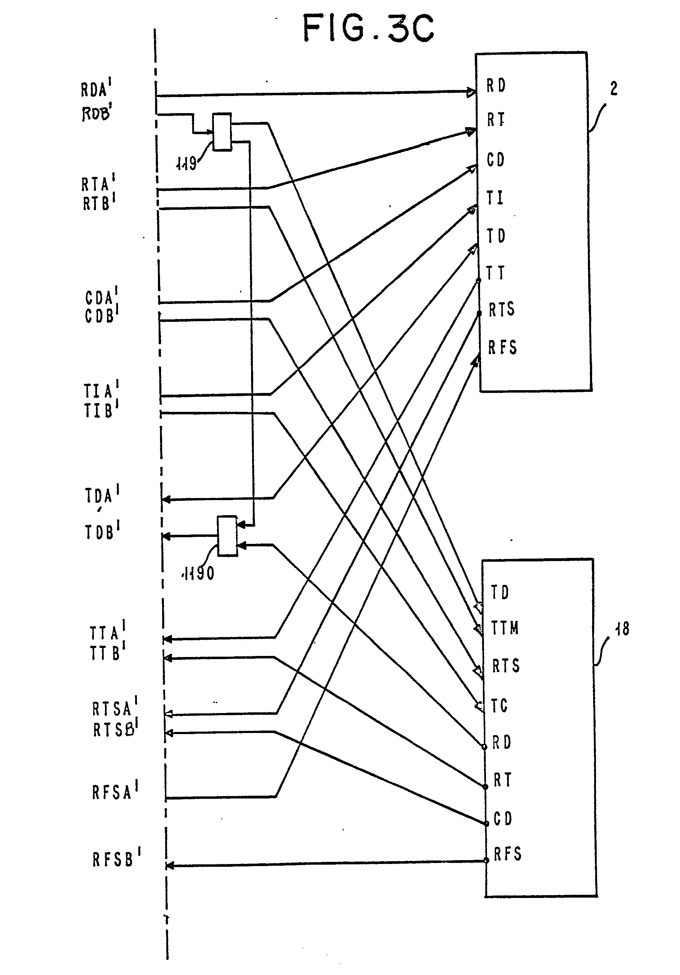

La commande de test spécifie "test de boucle éloignée". Ce test correspond au test de la boucle 2 définie par l'Avis V54 du CCITT. Lorsque le décodeur 74 reconnaît cette commande, les circuits d'émission 75 coupent la porteuse pendant un court instant puis une séquence d'initialisation génèrée par les circuits 75 et la commande de test stockée dans le registre 73 sont transmises avec un débit de service qui est relativement lent et donc robuste aux bruits, par exemple un débit de 1200 bps. La partie modem 15 du modem multicanal 13 reconnaît la coupure de porteuse puis la séquence d'initialisation et en réponse passe au débit de service. La commande de test reçue est stockée dans un registre et décodée. Les lignes RDB' et TDB' du modem multicanal 13 qui correspondent aux lignes RDB et TDB du modem multicanal 6 sont reliées entre elles et la commande de test est alors renvoyée au DTE central 1 à travers la partie modem 9, la ligne RD et la ligne RDB. (Le modem multicanal 13 sera décrit en détail en reference à la figure 3). Lorsque le DTE central 1 reconnaît la commande de test en retour il génère une séquence de test sur la ligne TDB qui est transmise au débit de test qui est ici de 4800 bps par le modem multicanal 6, reçue par le modem multicanal 13, rebouclée au niveau des lignes RDB' et TDB' puis retransmise par le modem multicanal 13 au modem multicanal 6 qui la transfère au DTE central 1 par la ligne RDB. Le DTE central 1 vérifie la séquence de test reçue pour déterminer si elle est en erreur. Ce test en soi est aussi connu de même que l'utilisation d'un débit de service (modems IBM 3863, IBM 3864 et IBM 3865). La différence présentée par l'invention est que la configuration de test est appliquée au modem multicanal par la jonction 7B qui correspond au sous-canal à tester et que la boucle éloignée est réalisée au niveau de la jonction 21B qui correspond au sous-canal à tester.

L'homme de l'art comprendra qu'il est ainsi possible de réaliser tous les tests appropriés au niveau des modem multicanaux avec une sélection des différentes jonctions 7A à 7D 21A à 21D.

SECOND CAS: Le bit indicateur de niveau de liaison a la valeur "1" indiquant que le test est pour le second niveau de liaison. Lorsque le décoder 74 reconnaît que le bit indicateur a la valeur "1", les circuits d'émission 75 coupent la porteuse pendant un court instant puis les signaux suivants sont transmis en séquence au modem multicanal 13 avec le débit de service: la séquence d'initialisation génèrée par les circuits d'émission 75, les six premiers octets de la commande de test stockée dans le registre 73 et qui sont appliqués aux circuits d'émission 75 à travers la porte 69, le code de configuration de test étendu à huit bits par des "0" dans le registre 67 et qui est appliqué aux circuits d'émission 75 à travers la porte 69, puis enfin le dernier octet de la commande de test stockée dans le registre 73. La commande de test envoyée au modem multicanal 13 a alors le format suivant:

F, A, Contrôle, Cde de test, FCS, Code Configuration, F.

Le traitement de cette commande par le modem multicanal 13 sera décrit en se référant à la figure 3 qui en illustre un exemple de réalisation. Chacune des jonctions 21A à 21D et 16 comprend un certain nombre de lignes définies par l'Avis V24 du CCITT et on a identifié sur le figure 3 les lignes des jonctions 21A à 21D pour les abréviations définies précédemment en référence à la figure 2 en Y accolant respectivement les suffixes A', B', C' et D', et celles de la jonction 16 par ces mêmes abréviations surmontées du prime "'".

Les bits reçus du canal de transmission 12 sont disponibles à la sortie des circuits de réception

9

conventionels 80 de la partie modem 15. La sortie des circuits 80 est appliquée à une porte 81 dont une sortie est appliquée à une entrée d'une autre porte 82. Une autre sortie de la porte 81 est appliquée à une registre de commande de test 83 ayant une sortie série reliée à l'autre entrée de la porte 82. Le registre de commande de test 83 est reliée à un décodeur 84 et au bus 17.

La sortie de la porte 82 est appliquée à l'entrée d'une porte 79 dont la sortie est reliée par la ligne RD' de la jonction 16 à une logique de réception 85 qui est identique à la logique de réception 59 de la figure 2. La logique de réception 85 reçoit aussi par un bus 86 le contenu d'un registre de configuration à quatre positions de bit CFRG3, qui est chargé par le bus 17. Le bus 86 est aussi appliqué à un décodeur 87 qui a quatre sorties reliées par des lignes 88 à 91 à une logique de sélection 92 qui est semblable à la logique de sélection de RD 64 de la figure 2 et qui est reliée à la logique de réception 85 par des lignes 93 à 96. La logique de sélection 92 a quatre sorties reliées aux lignes RDA', RDB', RDC' et RDD' des jonctions 21A à 21D. La ligne RT' de la jonction 16 de la figure 1 est reliée à la logique de réception 85 et à un diviseur de fréquence programmable 97 qui est semblable au diviseur de fréquence 58 de la figure 2, qui est contrôlé par le bus 86 et qui a quatre sorties reliées aux lignes RTA', RTB', RTC' et RTD' des jonctions 21A et 21D. Ces quatre lignes sont aussi appliquées à la logique de réception 85. La ligne CD' de la jonction 16 est reliée à une logique de sélection 98 qui reçoit aussi les lignes 88 à 91 et qui a quatre sorties reliées aux lignes CDA', CDB', CDC' et CDD' des jonctions 21A et 21D. La ligne TI' de la jonction 16 est reliée aus lignes TIA', TIB', TIC' et TID' des jonctions 21A et 21D. Les lignes TDA', TDB', TDC' et TDD' des jonctions 21A à 21D et les lignes 88 à 91 sont appliquées à une logique de sélection 99 qui est semblable à la logique de sélection de TD 42 de la figure 2 et qui a quatre sorties reliées à quatre registres tampons élastiques 100 à 103 par des lignes 104 à 107. Ces registres tampons élastiques 100 à 103 reçoivent respectivement les lignes TTA', TTB', TTC' et TTD' des jonctions 21A à 21D et des lignes 108 à 111 reliées aux sorties d'une diviseur de fréquence programmable 112 qui est semblable au diviseur de fréquence 51 de la figure 2 et qui reçoit la ligne TTM' de la jonction 16 et le bus 86. Les sorties des registres tampons élastiques sont appliquées à une logique d'émission 113 qui est identique a la logique d'émission 56 de la figure 2. La logique d'émission 113 reçoit aussi le bus 86 et la ligne TTM' et a sa sortie reliée à la ligne TD' de la jonction 16. Les lignes RTSA', RTSB', RTSC' et RTSD' des jonctions 21A à 21D sont appliquées à une porte OU 114 dont la sortie est reliée à la ligne RTS' de la jonction 16. La ligne RFS' de la jonctions 16, les lignes RTSA' à RTSD' des jonctions 21A à 21D et les lignes 88 à 91 sont appliquées à une logique de sélection 115 qui est similaire à la logique de sélection 65 de la figure 2. La sortie de la logique de sélection 115 est reliée à la ligne RFSA' de la jonction 21A. Les lignes RFSB', RFSC' et RFSD' des jonctions 21B à 21D et les lignes 88 à 91 sont appliquées à une logique de sélection 116 dont la sortie est reliée à une ligne RFSO de la jonction 16. Dans la partie modem 15, la ligne TD' de la jonction 16 est reliée aux circuits d'émission conventionnels 117 du modem, à travers une porte 118 dont une autre entrée est reliée à une sortie de la porte 79. La sortie des circuits d'emission 117 est reliée au canal de transmission 12.

Les lignes de la jonction 21A sont connectées aux points d'accès correspondant du DTE 2, i.e., la ligne RDA' est connectée au point d'accès RD, la ligne RTA' est connectée au point d'accès RT, etc. Par contre, les lignes des jonctions 21B à 21D ne sont pas toutes connectées aux points d'accès correspondants des modems 18 à 20 respectivement. On a illustré à titre d'exemple sur la figure 3C la connexion des lignes de la jonction 21B aux points d'accès de modem 18. Les lignes RTB', CDB', TIB', TTB', RTSB' et RFSB' sont respectivement connectées aux points d'accès TTM, RTS, TC, RT, CD et RFS. La ligne RDB' est appliquée à une porte 119 dont une sortie est reliée au point d'accès TD du modem 18 et l'autre sortie est reliée à une entré d'une porte 1190. La porte 1190 a sa sortie reliée à la ligne TDB' et son autre entrée reliée au point d'accès RD du modem 18. Les lignes des jonctions 21C et 21D sont respectivement connectées aux points d'accès des modems 19 et 20 de façon identique.

On décrira maintenant brièvement le fonctionnement en mode de données du dispositif de la figure 3. Le code de configuration utilisé par le réseau, dans l'exemple choisi, le code "0011" correspondant à la configuration No. 2 est stocké dans le registre de configuration CFRG3 qui se comporte comme CFRG2 et est chargé de la même manière. Les lignes TI', TIA', TIB', TIC' et TID' sont basses. Les lignes CD' et CDA' et CDB' sont hautes. Les bits reçus du canal de transmission 12 sont appliqués avec une débit de 9600 bps à la logique de réception 85 à travers les portes 81, 82, et 79 et la ligne RD'. Dans la logique de réception 85, des bits reçus sont groupés en quadbits et les bits de chacun d'eux sont distribués à la cadence de 4800 bps sur les lignes 93 et 92 sous le contrôle du contenu du registre CFRG3 et des signaux d'horloge sur RTA' et RTB' dérivés des signaux sur la ligne RT'.

Les bits sur la ligne 93 trasversent la logique de sélection 92 et sont appliqués au DTE 2 du site intermédiare par la ligne RDA'. Les bits sur la ligne 94 traversent la logique de sélection 92 et sont appliqués par la ligne RDB' et à travers la porte 119 au point d'accès TD du modem maître 18 pour transmission au DTE 3 situé dans un site éloigné.

Les bits de données envoyés par le DTE 2 au DTE central 1 sont transférés au modem multicanal 13 par la ligne TDA', traversent la logique se sélection 99 et sont chargés dans le registre tampon élastique 100 sous le contrôle des signaux d'horloge à 4800 Hz fournis par la DTE 2 sur la ligne TTA'. Les bits de données envoyés par la DTE 3 au DTE central 1 sont transmis au modem maître 18 par le modem éloigné 25, transférés du point d'accès RD du modem 18 à la ligne TDB', traversent la logique de sélection 99 et sont chargés dans le registre tampon élastique 101 sous le contrôle des signaux d'horloge à 4800 Hz fournis par le modem maître 18 sur la ligne TTB'. Les bits contenus dans les registres 100 et 101 en sont lus sous le contrôle des signaux d'horloge à 4800 Hz sur les lignes 108 et 109 qui sont dérivés des signaux d'horloge à 9600 Hz fournis par la partie modem 15 sur la ligne TTM', et combinés en quadbits dans la logique d'émission 113 sous le contrôle du contenu du registre CFRG3. Les bits constituant chacun des quadbits sont appliqués à la cadence de 9600 bps fournis par les signaux d'horloge sur la ligne TTM' aux circuits d'émission 117 de la partie modem 15 d'où ils traversent le canal de transmission 12 de façon connue.

Le modem multicanal 13 entre en mode de test lorsqu'il détecte une coupure de porteuse suivie par une séquence d'initialisation au débit de service. Le modem multicanal 13 commute alors ses circuits de réception au débit de service, se synchronise sur le séquence d'initialisation reçue, lève la ligne TI', baisse la ligne CD' et conditionne la porte 81 de façon à ce que la commande de test qui suit la séquence d'initialisation soit stockée dans le registre 83. Le décodeur 84 décode le commande de test et tout d'abord le bit indicateur de niveau de liaison. Deux cas peuvent aussi se présenter.

*Premier cas*

Le bit indicateur de niveau de liaison a la valeur "0", indiquant que le test est pour le premier niveau de liaison. Le modem multicanal 13 réalise le test spécifié dans la commande. On supposera par exemple que la commande du test spécifie "test de boucle éloigné" comme décrit plus haut au niveau du modem multicanal 6. Le décodeur 84 conditionne les portes 79 et 118 et la commande stockée dans le registre 83 est retransmise au débit de service au DTE central 1 à travers les circuits d'émission 117, le modem multicanal 6 et la ligne RDB de la jonction 7B.

Le modem multicanal 13 passe au débit 4800 bps, et les lignes TDB' et RDB' de la jonction 21B sont déconnectées du modem maître 18 et connectées entre elles à travers les portes 119 et 1190 commandées par le décodeur 84. La séquence de test envoyée pa le DTE central 1 est reçue par les circuits de réception 80 et appliquée à la logique de réception 85 par la ligne RD', traverse la logique de sélection 92, est appliquée à la logique de sélection 99 par les lignes TDB' et RDB' reliées entre elles, traverse la logique d'émission 113, et est envoyée au DTE central 1 par la partie modem 15, via le modem multicanal 6 et la ligne RDB.

*Second cas*

Le bit indicateur de niveau de liaison a valeur "1", indiquant que le test est pour le second niveau de liaison. Dans ce case le registre 83 contient aussi le code de configuration de test "1011" qui est chargé par le bus 17 dans le registre de configuration CFRG3. En réponse à ce code de configuration de test, le décodeur 87 lève celle des lignes 88 à 91 qui correspond au sous-canal à tester, c'est-à-dire dans l'exemple considéré la ligne 89 représentative du sous-canal B. La ligne TI' étant haute, les lignes TIA', TIB', TIC' et TID' sont hautes. La ligne TIA' étant haute le DTE 2 n'intervient pas pendant le test. La ligne CD' étant remise haute, la logique de sélection 98, sous le contrôle de la ligne 89 seule haute, baisse les lignes CDA', CDC' et CDD' isolant ainsi les modems maîtres 19 et 20 du test, et laisse leve la ligne CDB'.

Le modem maître 18 détecte que les lignes TIB' et RTSB' sont hautes et biasse RFSB'. Lorsque le modem maître 18 est prêt à recevoir une commande de test à 4800 bps sur la ligne RDB', il lève la ligne RFSB et la logique de sélection 116 lève la ligne RFSO. La partie modem 15 détecte que la ligne RFSO est passée au niveau haut, et en réponse transfère sur la ligne RD' la commande de test stockée dans le registre 83.

Cette commande de test traverse la logique de réception 85 et la logique de sélection 92 et est appliquée au modem maître 18 par la ligne RDB'. Le modem maître 18 effectue alors le test spécifié dans la commande de façon connue comme par exemple les modems IBM 3863 et IBM 3864, le test pouvant bien sûr être pour le modem maître 18, pour le modem éloigné 25 ou pour les deux.

Le résultat du test est fourni par le modem maître 18 au modem multicanal 13 sur la ligne TDB', traverse les logiques 99 et 113 et est transmis au débit de service au modem multicanal 6 par les circuits d'émission 117. Le modem multicanal 6 transfère ce résultat au DTE central 1 par la ligne RDB de la jonction 7B.

On a représenté sur la figure 4 un exemple de réalisation de la logique de sélection de TC 36 de la figure 2. La ligne TCA est appliquée à une entrée d'une porte ET 120 dont la sortie est reliée à l'entrée vraie d'une bascule à verrouillage 12 dont la sortie vraie est reliée à la ligne 38. La sortie de la porte ET 120 est aussi reliée à travers un inverseur 122 à une entrée d'une porte ET 123 ayant une autre entrée reliée à la ligne TCB. La sortie de la porte ET 123 est reliée à l'entrée vraie d'une bascule à verrouillage 124 dont la sortie vraie est reliée à la ligne 39, et à travers un inverseur 125 à une entrée d'un porte ET 126. La sortie de l'inverseur 122 et la ligne TCC sont aussi appliquées à la porte ET 126 dont la sortie est reliée à l'entrée vraie d'une bascule à verrouillage 127 qui a sa sortie vraie reliée à la ligne 40. La sortie de la porte ET 126 est appliquée à l'entrée d'un inverseur 128. La sortie des inverseurs 122, 125 et 128 et la ligne TCD sont appliquées à une porte ET 120 dont la sortie est appliquée à l'entrée vraie d'une bascule à verrouillage 130 qui a sa sortie vraie reliée à ligne 41. Les sorties vraies des bascules à verrouillage 121, 124, 127 et 130 sont appliquées à une porte ou 131 dont la sortie est reliée à la ligne

11

37. Les sorties complémentaires des bascules à verrouillage 121, 124, 127 et 130 sont appliquées à une porte ET 132 dont la sortie est appliquée à une entrée de quatre portes OU 1320, 1321, 1322, 1323 dont les sorties sont respectivement appliquées aux portes ET 120, 123, 126 et 129. Les sorties vraies des bascules à verrouillage 121, 124, 127 et 129 sont respectivement appliquées à l'autre entrée de chacune des portes OU 1320 à 1323.

En fonctionnement, si toutes les lignes TCA à TCD sont basses la sortie de la porte ET 132 est haute. Si la ligne TCA monte, la sortie de la porte ET 120 passe au niveau haut, la sortie vraie de la bascule à verrouillage 121 passe au niveau haut et les lignes 37 et 38 passent au niveau haut. La sortie vraie de la bascule à verrouillage 121 étant au niveau haut, sa sortie complémentaire est au niveau bas et la sortie de la porte ET 132 passe au niveau bas, ce qui verrouille au niveau bas les sorties des portes ET 123, 126 et 129 et en conséquence, les lignes 39 à 41. Le sortie de la porte ET 120 est maintenue au niveau haut par la sortie vraie de la bascule à verrouillage 121. Le dispositif de la figure 4 fonctionne de manière similaire si l'une quelconque des autres lignes TCB à TCD monte. Le rôle des inverseurs 122, 125 et 128 est d'introduire une priorité dans la prise en compte des montées des lignes TCA à TCD s'il arrivait que deux des lignes montent simultanément, le temps de commutation d'un inverseur étant inférieur à celui d'une bascule à verrouillage ajouté à celui de la porte ET 132. Dans le dispositif illustré sur la figures les lignes TCA à TCD ont une priorité décroissante.

On a représenté sur la figure 5 un exemple de réalisation de la logique de sélection de TD 42. La ligne 32 est appliquée à un inverseur I dont la sortie et la ligne TDA sont appliquées à une porte OU 133 dont la sortie est reliée à ligne 47. La ligne 33 est appliquée à une inverseur I dont la sortie et la ligne TDB sont appliquées à une porte OU 134 dont la sortie est reliée à la ligne 48. La ligne 34 est appliquée à un inverseur I dont la sortie et la ligne TCB sont appliquées à une porte OU 135 dont la sortie est reliée à la ligne 49. La ligne 35 est appliquée à un inverseur I dont la sortie et la ligne TCD sont appliquées à une porte OU 136 dont la sortie est reliée à la ligne 50. En fonctionnement en mode de données, les lignes 32 à 35 sont basses ou hautes comme indiqué dans le tableau I et les lignes TDA à TDD sont respectivement connectées aux lignes 47 à 50. En fonctionnement en mode de test seule cells des lignes 32 à 35 qui correspond au sous canal à tester est haute. Si par exemple la ligne 33 correspondant au sous canal B est haute, les sorties des portes 133, 135 et 136, et ainsi les lignes 47, 49 et 50 sont maintenues à un niveau haut et les bits sur la ligne TDB sont transférés sur la ligne 48 à travers la porte OU 134. D'une manière générale, cells des lignes 47 à 50 qui ne correspondent pas au sous-canal à tester sont verrouillées à l'état haut.

On a représenté sur la figure 6 un exemple de réalisation de la logique d'émission 56 de la figure 2. Le bus 11 est appliqué à une décodeur 140 dont la sortie et les lignes 52 à 55 sont appliquées à un ensemble de portes logiques 141. L'ensemble de portes 141 a quatre sorties reliées respectivement par quatre lignes 142 à 145 aus quatre positions de bit d'un registre d'émission 146. Le registre d'émission 146 a sa sortie série reliée à la ligne TD et son entrée horloge reliée à la ligne TTM. Sur la figure on a identifié les bits contenus dans le registre 146 par les désignations Q1 à Q4. En fonctionnement en mode de données, le décodeur 140 décode le code de configuration contenu dans le registre CFRG2 qu'il reçoit par le bus 11, et conditionne l'ensemble des portes 141 de façon à ce que les bits des sous-canaux A à D qui arrivent respectivement par les lignes 52 à 55 soient transférés dans le registre d'émission 146 conformément au tableau II décrit en référence à la figure 2. Les bits Q1 à Q4 sont lus du registre d'émission 146 sur la ligne TD à la cadence des signaux d'horloge sur la ligne TTM. En fonctionnement en mode de test, le décodeur 140 décode le code de configuration de test qu'il reçoit par le bus 11 et conditionne l'ensemble de portes 141 de façon à ce que les bits des sous-canaux A à B soient transférés dans le registre d'émission 146 conformément au tableau III suivant:

TABLEAU III

| Débit du test | Affectation des bits dans le quadbit | | | |
|---|---|---|---|---|
| | Q1 | Q2 | Q3 | Q4 |
| 9600 | X | X | X | X |
| 4800 | X | X | | |
| 2400 | X | | | |

Si le débit du test spécifié dans le code de configuration de test est 9600 bps, les bits du sous-canal à tester disponibles sur celle des lignes 52 à 55 qui correspond au sous-canal à tester sont successivement chargés dans les quatre positions de bit du registre 146. Si le débit de test spécifié dans le code de configuration de test est 4800 bps, les bits du sous-canal à tester disponibles sur celle des lignes 52 à 55 qui correspond au sous-canal à tester sont successivement chargés dans les deux premières positions de bit du registre 146. Si le débit de test spécifié dans le code configuration de test est 2400 bps seule la première position de bit du registre d'émission 146 reçoit des bits du sous-canal à tester. Les quadbits lus du registre d'émission 146 sont chargés dans le registre 71 de la partie modem 9 (figure 2) et le rôle de la porte de sélection 72 est d'en lire les positions de bit appropriés sous le contrôle du code de configuration stocké dans le registre 67, et conformément au tableau III. Par exemple, si le débit du test est 4800 bps, la logique de sélection 72 lira successivement les deux premières positions du bit et ne lira pas les autres positions de bit du registre 71.

On a représenté sur la figure 7 un exemple de réalisation de la logique de réception 59 de la figure 2. Le bus 11 est appliqué à un décodeur 147 dont la sortie et les lignes RTA à RTD sont appliquées à un ensemble de portes logiques 148 qui reçoit aussi quatre lignes 149 à 152 reliées respectivement aux quatre positions de bit d'un registre de réception 153. Le registre de réception 153 a son entrée série reliée à la ligne RD et son entrée horloge reliée à la ligne RT. L'ensemble de portes 148 a quatre sorties reliées respectivement aux lignes 60 à 63. L'homme de l'art comprendra que le fonctionnement de la logique de réception est l'inverse de celui de la logique d'émission 56 illustrée sur le figure 6. Les bits de chacun des quadbits stockés dans le registre de réception 153 sont sélectivement transférés sur les lignes 60 à 63 par l'ensemble de portes 148 sous le contrôle du décodeur 147 et des signaux d'horloge sur les lignes RTA à RTD.

On a représenté sur la figure 8 un exemple de réalisation de la logique de sélection de RFS 65 de la figure 2. Les lignes RFS, RTSA et 32 sont appliquées à une porte ET 155 dont la sortie est reliée à la ligne RFSA. Les lignes RFS, RTSB et 33 sont appliquées à une porte ET 156 dont la sortie est reliée à la ligne RFSB. Les lignes RFS, RTSC et 34 sont appliquées à une porte ET 157 dont la sortie est reliée à la ligne RFSC. Les lignes RFS, RTSD et 35 sont appliquées à une porte ET 158 dont la sortie est reliée à la ligne RFSD. En fonctionnement, lorsque la ligne RFS est basse, toutes les lignes RFSA à RFSD sont basses. Lorsque la ligne RSF est haute, pour que l'une des lignes RFSA à RFSD soit haute il faut que celle des lignes RTSA à RTSD qui lui correspond soit haute et que celle des lignes de sélection 32 à 35 qui lui correspond soit haute.

On a représenté sur la figure 9 un exemple de réalisation de la logique de sélection de CD 66 de la figure 2. Les lignes 32 at CD sont appliquées à une porte ET 164 dont la sortie est reliée à la ligne CDA. Les lignes 33 et CD sont appliquées à une porte ET 165 dont la sortie est reliée à la ligne CDB. Les lignes 34 et CD sont appliquées à une porte ET 166 dont la sortie est reliée à la ligne CDC. Les lignes 35 et CD sont appliquées à une porte ET 167 dont la sortie est reliée à la ligne CDD. Si la ligne CD est basse toutes les lignes CDA à CDD sont basses. Si la ligne CD est haute, le sélection des lignes CDA à CDD est obtenue de la façon suivante selon le mode de fonctionnement du modem.

En fonctionnement en mode de données, les lignes 32 à 35 sont basses ou hautes comme indiqué dans le tableau I et seules sont hautes celles des lignes CDA à CDD correspondant à celle des lignes 32 à 35 qui sont hautes. En fonctionnement en mode de test, seule l'une des lignes 32 à 35, par exemple le ligne 33 est haute et, si la ligne CD est haute, la ligne CDB est haute et les lignes CDA, CDC et CDD sont basses.

**Revendications**

1. Modem multicanal du type comprenant plusieurs jonctions (7A—7D) d'entrée-sortie pouvant respectivement recevoir les bits de plusieurs sous-canaux de données, des moyens de multiplexage (42, 43—46, 56) pour multiplexer les bits de données reçus à travers celles des jonctions qui sont actives en un unique train de bits, en fonction d'une configuration de multiplexage et des moyens d'émission (75) pour émettre ce train de bits à travers un canal de transmission, caractérisé en ce qu'il comprend:

des moyens (36) pour détecter une demande de test en provenance de l'une des jonctions,

des moyens (30) pour, en réponse à la détection d'une demande de test générer un code de configuration de test identifiant la jonction qui a fourni la demande de test,

des moyens (11) pour, en réponse au code de configuration de test, mettre lesdits moyens de multiplexage en une configuration de test qui est telle que seule la jonction qui a reçu la demande de test détectée soit active,

des moyens d'emmagasinage (73) pour stocker une commande de test reçue par la jonction qui a reçu la demande de test, cette commande comprenant une indication du test à effectuer et un indicateur de niveau de liaison,

des moyens de décodage (74) pour décoder l'indicateur de niveau de liaison, et

des moyens (67, 73) pour appliquer la commande de test reçue et le code de configuration de test auxdits circuits d'émission pour transmission à travers le canal de transmission si l'indicateur de niveau de liaison désigne un niveau de liaison autre que celui incluant le modem.

2. Modem multicanal selon la revendication 1, caractérisé en ce qu'il comprend des moyens (9) commander le test spécifié dans le commande de test si l'indicateur de niveau de liaison désigne le niveau de liaison incluant le modem.

3. Modem multicanal selon l'une quelconque des revendications 1 et 2 caractérisé en ce que le code de configuration de test identifie en outre le débit binaire de la commande de test.

4. Modem multicanal selon l'une quelconque des revendications précédentes et du type compre-

# O 053 212

nant des moyens de réception (78) pour recevoir des signaux du canal de transmission et les convertir en un unique train de bits et des moyens de démultiplexage (59—64) pour démultiplexer ce dernier train de bit en autant de sous-canaux qu'il y a de jonctions actives et les appliquer à ces jonctions actives, en fonction de la configuration de multiplexage, caractérisé en ce que cesdits moyens de démultiplexage sont mis en configuration de test en fonction du code de configuration de test, et en ce que le résultat du test spécifié dans la commande de test est fourni par le modem sur la jonction qui a reçu la demande de test.

5. Modem multicanal du type comprenant plusieurs jonctions (21A—21D) d'entrée-sortie pouvant respectivement recevoir les bits de plusieurs sous-canaux de données, des moyens de réception (80) pour recevoir des signaux d'un canal de transmission et les convertir en un unique train de bits, et des moyens de démultiplexage (85, 92) pour démultiplexer ce train de bits en autant des sous-canaux de données qu'il y a de jonctions actives et les appliquer à ces jonctions actives, en fonction d'une configuration de multiplexage, caractérisé en ce qu'il comprend:

des moyens (83) pour stocker une commande de test reçue du canal de transmission, cette commande comprenant une indication du test à effectuer, un indicateur de niveau de liaison, et si ce dernier désigne un niveau de liaison autre que celui incluant le modem un code de configuration de test identifiant l'une des jonctions,

des moyens (86, 87) pour en fonction du code de configuration de test mettre lesdits moyens de démultiplexage en une configuration de test qui est telle que seule la jonction identifiée par ce code de configuration soit active,

des moyens de décodage (84) pour décoder l'indicateur de niveau de liaison, et

des moyens (84, 85, 92) pour appliquer la commande de test à la jonction identifiée par le code de configuration si l'indicateur de niveau de liaison désigne un niveau de liaison autre que celui incluant le modem.

6. Modem multicanal selon la revendication 5, caractérisé en ce qu'il comprend des moyens (14) pour commander le test spécifié par la commande de test si l'indicateur de niveau de liaison désigne le niveau de liaison incluant le modem.

7. Modem multicanal selon l'une quelconque des revendications 5 et 6, caractérisé en ce que le code de configuration de test indentifie le débit avec lequel la commande de test est appliquée à la jonction identifiée par le code de configuration.

8. Modem multicanal selon l'une quelconque des revendications 5 et 7 du type comprenant des moyens de multiplexage (99, 100—103, 113) pour multiplexer les bits de données reçus à travers les jonctions actives en un unique train de bits, en fonction d'une configuration de multiplexage, et des moyens d'émission (117) pour émettre cet unique train de bits à travers le canal de transmission, caractérisé en ce que les moyens de multiplexage sont mis en configuration de test en fonction du code de configuration de test, et en ce que le résultat du test spécifié dans la commande de test est reçu sur la jonction identifiée par le code de configuration de test et émis à travers le canal de transmission par les moyens d'émission.

9. Procédé pour tester un réseau comprenant un premier et une second modems multicanaux communiquant entre eux par un canal de transmission, chacun d'eux ayant plusieurs jonctions d'entrée-sortie, et chaque jonction d'un modem multicanal étant associée à l'une des jonctions de l'autre modem, caractérisé en ce qu'il comprend les étapes suivantes.

appliquer une demande de test à une des jonctions du premier modem multicanal,

générer un code de configuration de test identifiant la jonction à laquelle la demande de test a été appliquée.

mettre le premier modem multicanal en une configuration de test telle que seule la jonction à laquelle la demande de test a été appliquée soit active, en réponse à la réception de la demande de test par le premier modem multicanal,

appliquer à la jonction à laquelle la demande de test a été appliquée une commande de test comprenant une indication du test à effectuer et un indicateur de liaison,

dècoder l'indicateur de niveau de liaison,

transmettre au second modem multicanal et à travers le canal de transmission la commande de test reçue et le code de configuration de test, si l'indicateur de niveau de liaison désigne un niveau de liaison autre que inclut le premier modem multicanal, et

dans le second modem multicanal, décoder l'indicateur de niveau de liaison de la commande de test reçu, et si celui-ci désigne un niveau de liaison autre que celui qui inclut le second modem multicanal, mettre celui-ci en une configuration de test telle que seule sa jonction qui est associée à celle du premier modem multicanal qui a reçu la demande de test est active, et appliquer la commande de test à cette jonction associée.

10. Procédé selon la revendication 9, caractérisé en ce que le code de configuration de test identifie en outre le débit binaire de la commande de test.

11. Système pour tester un réseau comprenant un premier et un second modems multicanaux communiquant entre eux par un canal de transmission, le premier modem multicanal comprenant plusieurs jonctions (7A—7D) d'entrée-sortie pouvant respectivement recevoir les bits de plusieurs sous-canaux de données, des moyens de multiplexage (42, 43—46, 56) pour multiplexer les bits de données

14

reçus à travers celles des jonctions qui sont actives en un premier train de bits, en fonction d'une configuration de multiplexage et des moyens d'emission (75) pour émettre ce train de bits à travers le canal de transmission, et le second modem multicanal comprenant plusieurs jonctions (21A—21D) d'entrée-sortie, chacune d'elle étant associée à une jonction de premier modem multicanal, des moyens de réception (80) pour recevoir les signaux du canal de transmission et les convertir en un second train de bits, et des moyens de démultiplexage (85, 92) pour démultiplexer ce train de bits en autant de sous-canaux de données qu'il y a de jonctions actives et les appliquer à ses jonctions actives, en fonction de la configuration de multiplexage, caractérisé en ce qu'il comprend:

dans le premier modem multicanal:

des moyens (36) pour détecter une demande de test en provenance de l'une des jonctions,

des moyens (30) pour, en réponse à la détection d'une demande de test générer un code de configuration de test identifiant la jonction qui a fourni la demande de test,

des moyens (11) pour en réponse qu code de configuration de test mettre lesdits moyens de multiplexage en une configuration de test qui est telle que seule la jonction qui a reçu la demande de test détectée soit active,

des premiers moyens d'emmagasinage (73) pour stocker une commande de test reçue par la jonction qui a reçu la demande de test, cette commande comprenant une indication du test à effectuer et un indicateur de niveau de liaison,

des premiers moyens de décodage (74) pour décoder l'indicateur de niveau de liaison, et

des moyens (67, 73) pour appliquer la commande de test reçue et le code de configuration de test auxdits circuits d'émission pour transmission à travers le canal de transmission si l'indicateur de niveau de liaison désigne un niveau de liaison autre que celui incluant les premier et second multicanaux,

et dans le second modem multicanal:

des moyens (83) pour stocker la commande de test et le code de configuration de test reçus du canal de transmission,

des moyens (86, 87) pour fonction du code de configuration de test reçu mettre lesdits moyens de démultiplexage en une configuration de test qui est telle que seule la jonction qui est associée à la jonction de premier modem multicanal ayant reçu la demande de test soit active, et

des moyens (84, 85, 92) pour appliquer la commande de test à cette jonction active si l'indicateur de niveau de liaison désigne un niveau autre que celui incluant les premier et second modems multicanaux.

12. Système selon la revendication 11 et dans lequel le second modem multicanal comprend des moyens de multiplexage (99, 100—103, 113) pour multiplexer les bits de données reçus à travers les jonctions actives en un unique train de bits, en fonction d'une configuration de multiplexage, et des moyens d'émission (117) pour émettre cet unique train de bits à travers le canal de transmission, caractérisé en ce que les moyens de multiplexage sont mis en configuration de test en fonction du code de configuration de test, et en ce que le résultat du test spécifié dans la commande de test est reçu sur la jonction identifiée par le code de configuration de test et émis à travers le canal de transmission par les moyens d'émission.

13. Système selon la revendication 11 caractérisé en ce qu'il comprend des moyens (9, 14) pour commander le test spécifié par la commande de test si l'indicateur de niveau de liaison désigne celui qui inclut les premier et second modems multicanaux.

14. Système selon l'une quelconque des revendications 11 à 13 caractérisé en ce que le code de configuration identifie le débit de la commande de test.

**Patentansprüche**

1. Mehrkanal-Modem von Typ mit mehreren Zonenübergängen (7A—7D), mit Ein- und Ausgängen, die jeweils die Bits mehrerer Daten-Unterkanäle aufnehmen können, Multiplexiermittel (42, 43—46, 56) für die Multiplexierung der durch die jeweils aktiven Zonenübergänge empfangenen Datenbits in einer einzigen Bit-Folge, in Abhängigkeit von einer Multiplexierkonfiguration und Sendemitteln (75) für die Ausgabe dieser Bit-Folge durch eine Übertragungskanal, dadurch gekennzeichnet, dass es umfasst:

Mittel (36) für die Detektion einer von einem der Zonenübergänge kommenden Testanforderung,

Mittel (30) für — als Antwort auf die Erkennung einer Testanforderung — die Erzeugung eines Testkonfigurationskodes, der den Zonenübergang definiert, von dem die Testanforderung ausgegangen ist,

Mittel (11) für — als Antwort auf den Testkonfigurationskode — die Anordnung der genannten Multiplexiermittel in eine Testkonfiguration, die so beschaffen ist, dass nur der Zonenübergang, der die erkannte Testanforderung erhalten hat, aktiv ist,

Speichermittel (73) für die Speicherung eines Testbefehls, der von dem Zonenübergang erhalten wurde, der die Testanforderung erhalten hat, wobei dieser Befehl eine Anzeige des auszuführenden Tests und einen Anzeiger des Verbindungsniveaus enthält,

Dekodierungsmittel (74) zum Dekodieren des Anzeigers der Verbindungsebene, und

Mittel (67, 73) zum Anlegen des empfangenen Testbefehls und des Testkonfigurationskodes an

15

# 0 053 212

die genannten Sendeschaltungen für die Übertragung durch den Übertragungskanal, wenn der Verbindungsniveauanzeiger ein anderes Verbindungsniveau anzeigt als das, welches das Modem enthält.

2. Mehrkanal-Modem gemäss Anspruch 1 dadurch gekennzeichnet, dass es Mittel (9) für die Steuerung des im Testbefehl spezifizierten Tests umfasst, wenn der Verbindungsniveauanzeiger das Verbindungsniveau bezeichnet, das das Modem enthält.

3. Mehrkanalmodem nach einem der Ansprüche 1 oder 2, dadurch gekennzeichnet, dass der Testkonfigurationskode ausserden den binären Durchsatz des Testbefehls anzeigt.

4. Mehrkanalmodem nach einem beliebigen der vorangehenden Ansprüche und vom Typ mit Empfangsmitteln (78) für die Aufnahme der Signale des Übertragungskanals und ihre Umwandlung in eine einzige Bitfolge und Demultiplexiermittel (59—64) für die Demultiplexierung dieser letzten Bitfolge auf ebenso viele Unterkanäle wie aktive Zonenübergänge vorhanden sind und für das Anlegen an diese aktiven Zonenübergänge, in Abhängigkeit von der Multiplexieranordnung, dadurch gekennzeichnet, dass diese Demultiplexiermittel in Testkonfiguration gebracht werden, in Abhängigkeit vom Testkonfigurationskode, und dadurch, dass das im Testbefehl spezifizierte Testergebnis vom Modem auf dem Zonenübergang geliefert wird, der die Testanforderung erhalten hat.

5. Mehrkanalmodem von Typ mit mehreren Zonenübergängen (21A—21D) als Ein- und Ausgängen, die jeweils die Bits von mehreren Daten-Unterkanälen empfangen können, Empfangsmittel (80) für die Aufnahme der Signale eines Übertragungskanals und ihre Umwandlung in eine einzige Bitfolge, und Demultiplexiermittel (85, 92) für die Verteilung dieser Bitfolge auf ebenso viele Datenunterkanäle wie aktive Zonenübergänge vorhanden sind, und für das Anlegen an diese aktiven Zonenübergänge, in Abhängigkeit von einer Multiplexierkonfiguration, dadurch gekennzeichnet, dass es enthält:

Mittel (83) für die Speicherung eines vom Übertragungskanal empfangenen Testbefehls, wobei dieser Befehl die Angabe des auszuführenden Tests und einen Verbindungsniveauanzeiger enthält, und, wenn dieser letztere ein anderes Verbindungsniveau anzeigt als das, das das Modem enthält, einen Testanordnungskode, der einen der Zonenübergänge identifiziert,

Mittel (86, 87) um, je nach dem Testkonfigurationskode die genannten Demultiplexiermittel in eine Testkonfiguration zu bringen, die so beschaffen ist, dass nur der von diesem Konfigurationskode identifizierte Zonenübergang aktiv ist,

Dekodiermittel (84) für die Dekodierung des Verbindungsniveauanzeigers, und

Mittel (84, 85, 92) zum Anlegen des Testbefehls an den durch den Konfigurationskode identifizierten Zonenübergang, wenn der Verbindungsniveauanzeiger ein anderes Verbindungsniveau bezeichnet als das, welches das Modem enthält.

6. Mehrkanalmodem gemäss Anspruch 5, dadurch gekennzeichnet, dass es Mittel (14) für die steuerung des vom Testbefehl spezifizierten Tests enthält, wenn der Verbindungsniveauanzeiger das Verbindungsniveau bezeichnet, das das Modem enthält.

7. Mehrkanalmodem nach einem der Ansprüche 5 oder 6, dadurch gekennzeichnet, dass der Testkonfigurationskode den Durchsatz identifiziert, mit welchem der Testbefehl an den vom Konfigurationskode identifizierten Zonenübergang angelegt wird.

8. Mehrkanalmodem gemäss eines der Ansprüche 5 und 7 un vom typ mit Multiplexiermitteln (99, 100—103, 113) für die Multiplexierung der über die aktiven Zonenübergänge in einer einzigen Bitfolge empfangenen Datenbits in Abhängigkeit von einer Multiplexierfunktion, und Sendemittel (117) für die Ausgabe dieser einzigen Bitfolge durch den Übertragungskanal, dadurch gekennzeichnet, dass die Multiplexiermittel je nach dem Testkonfigurationskode in Testkonfiguration gebracht werden, und dadurch, dass das im Testbefehl spezifizierte Testergebnis an dem vom Testkonfigurationskode identifizierten Zonenübergang empfangen und mit den Sendemitteln durch den Übertragungskanal ausgegeben wird.

9. Verfahren zum Testen eines Netzes, das ein erstes und ein zweites Mehrkanalmodem enthält, die durch eine Übertragungskanal miteinander in Verbindung stehen, wobei jedes von ihnen mehrere Ein- und Ausgangszonenübergänge besitzt, und jeder Zonenübergang eines Mehrkanalmodems einem Zonenübergang des anderen Modems zugeordnet ist, dadurch gekennzeichnet, dass es folgende Schritte enthält:

Anlegen einer Testanforderung an einen der Zonenübergänge des ersten Mehrkanalmodems,

Erzeugen eines Testkonfigurationskodes, der den Zonenübergang identifiziert, an den die Testanforderung angelegt wurde,

Anordnung des ersten Mehkanalmodems in einer Testkonfiguration, so dass nur der Zonenübergang, an den die Testanforderung angelegt wurde, aktiv ist, in Beantwortung auf den Empfang der Testanforderung durch das erste Mehrkanalmodem,

Anlegen eines Testbefehls an den Zonenübergang, an den die Testanforderung angelegt wurde, mit Angabe des auszuführenden Tests und einem Verbindungsanzeiger,

Dekodierung des Verbindungsniveauanzeigers,

Übertragung des empfangenen Testbefehls und des Testkonfigurationskodes an das zweite Mehrkanalmodem durch den Übertragungskanal, wenn der Verbindungsniveauanzeiger ein anderes Verbindungsniveau bezeichnet als das, welches das erste Mehrkanalmodem enthält, und

im zweiten Mehrkanalmodem, Dekiodieren des Anzeigers des Verbindungsniveau des empfangenen Testbefehls, und wenn dieser ein anderes Verbindungsniveau bezeichnet, als das, welches das

**O 053 212**

zweite Mehrkanalmodem enthält, Anordnung dieses Modems in einer Testkonfiguration, so dass nur der Zonenübergang, der dem des ersten Mehrkanalmodems zugeordnet ist, aktiv ist, un Anlegen des Testbefehls an diesen zugeordneten Zonenübergang.

10. Verfahren gemäss Anspruch 9, dadurch gekennzeichnet, dass der Testkonfigurationskode ausserdem den Binärdurchsatz des Testbefehls identifiziert.

11. System zum Testen eines Netzes, das ein erstes und ein zweites Mehrkanalmodem enthält, welche durch eine Übertragungskanal miteinander in Verbindung stehen, wobei das erste Mehrkanal-modem mehrere Zonenübergänge (7A—7D) als Ein- und Ausgänge enthält, die jeweils die Bits mehrerer Datenunterkanäle empfangen können, sowie Multiplexiermittel (42, 43—46, 56) zum Multiplexieren der Datenbits, die durch diejenigen der Zonenübergänge, welche aktiv sind, empfangen wurden, in einer erste Bitfolge, in Abhängigkeit von einer Multiplexierfunktion, und Sendemittel (75) als die Ausgabe dieser Bitfolge durch den Übertragungskanal, während das zweite Mehrkanalmodem eben-falls mehrere Zonenübergünge (21A—21D) für Ein- und Ausgänge enthält, wobei jeder von ihnen einem Zonenübergang des ersten Mehrkanalmodems zugeordnet ist, Empfangsmittel (80) für den Empfang der Signale aus dem Übertragungskanal und ihre Umwandlung in eine zweite Bitfolge, und Demultiplexiermittel (85, 92) für die Demultiplexierung dieser Bitfolge auf ebenso viele Datenunterkanäle wie Zonenübergänge aktiv sind, und ihr Anlegen an diese aktiven Zonenübergänge, dadurch gekennzeichnet, dass es umfasst:

im ersten Mehkanalmodem:

Mittel (36) zum Erkennen einer von einem der Zonenübergänge ausgehenden Testanforderung,

Mittel (30), um, als Antwort auf die Erkennung einer Testaufforderung, einen Testkonfigurationskode zu generieren, der den Zonenübergang identifiziert, welcher die Testaufforderung ausgegeben hat,

Mittel (11), um, als Antwort auf den Testkonfigurationskode, die genannten Multiplexiermittel in eine Testkonfiguration zu bringen, die so beschaffen ist, dass nur der Zonenübergang, der die erkannte Testaufforderung empfangen hat, aktiv ist,

erste Speichermittel (73) zum Speichern eines von dem Zonenübergang, der die Testaufforderung empfangen hat, erhaltenen Testbefehls, wobei dieser Befehl eine Angabe des Auszuführenden Tests und einen Verbindungsniveauzeiger enthält,

erste Dekodiermittel (74) zum Dekodieren des Verbindungsniveauanzeigers, und

Mittel (67, 73) zum Anlegen des empfangenen Testbefehls und des Testkonfigurationskodes an die genannten Sendekreise für die Übertragung durch den Übertragungskanal, wenn der Verbindungsniveauanzeiger ein anderes Verbindungsniveau als das bezeichnet, welches das erste und das zweite Mehrkanalmodem enthält,

und im zweiten Mehrkanalmodem:

Mittel (83) für die Speicherung des Testbefehls und des Testkonfigurationskodes, die durch den Übertragungskanal übermittelt wurden,

Mittel (86, 87), um, in Abhängigkeit vom Testkonfigurationskode, die besagten Demultiplexiermittel in eine Testkonfiguration zu bringen, die so beschaffen ist, dass nur der Zonenübergang aktiv ist, der dem Zonenübergang des ersten Mehrkanalmodems zugeordnet ist, welcher die Testaufforderung empfangen hat, und

Mittel (84, 85, 92) zum Anlegen des Testbefehls an diesen aktiven Zonenübergang, wenn der Verbindungsniveauanzeiger ein anderes Niveau anzeigt, als das, welches das erste und das zweite Mehrkanalmodem enthält.

12. System gemäss Anspruch 11, in dem das zweite Mehrkanalmodem Multiplexiermittel (99, 100—103, 113) umfasst, um die durch die aktiven Zonenübergänge empfangenen Datenbits zu einer einzigen Bitfolge multiplexieren, in Abhängigkeit von einer Multiplexierkonfiguration, und Sendemittel (117) für die Ausgabe dieser einzigen Bitfolge durch den Übertragungskanal, dadurch gekennzeichnet, dass die Multiplexiermittel in Abhängigkeit vom Testkonfigurationskode in Testkonfiguration gebracht werden, und dadurch, dass das im Testbefehl spezifizierte Testergebnis an dem Zonenübergang, der durch den Testkonfigurationskode identifiziert wird, empfangen und mit den Sendemitteln durch den Übertragungskanal ausgegeben wird.

13. System gemäss Anspruch 11, dadurch gekennzeichnet, dass es Mittel (9, 14) enthält, um den durch den Testbefehl spezifizierten Test zu steuern, wenn der Verbindungsniveauanzeiger das Niveau anzeigt, das das erste und das zweite Mehrkanalmodem enthält.

14. System nach einem der Ansprüche 11 bis 13, dadurch gekennzeichnet, dass der Konfigurationskode den Durchsatz des Testbefehls identifiziert.


**Claims**

1. A multiport modem of the type comprising several input/output interfaces (7A—7D) that may respectively receive the bits of several data sub channels, multiplexing means (42, 45—46, 56) for multiplexing together the data bits received through those of the interfaces which are active to form a single train of bits in accordance with a multiplexing configuration, and transmitter means (75) for sending said train of bits over a transmission channel, characterized in that it includes:

means (36) for detecting a test request received from one of the interfaces,

17

means (30) responsive to a test request to generate a test configuration code identifying the interface that supplied said test request,

means (11) responsive to said test configuration code to cause said multiplexing means to assume a test configuration such that only that interface which received the detected test request will be active,

storage means (73) for storing a test command received at the interface that received the test request, said command including an indication of the test to be performed and a link level identifier,

decoder means (74) for decoding said link level identifier, and

means (67, 73) for applying the received test command and the test configuration code to said transmitter means for transmission over said channel if said link level identifier indicates a link level other than that which includes the modem.

2. A multiport modem according to claim 1, characterized in that it includes means (9) for controlling the test specified in the test command if the link level indicated by the link level identifier includes the modem.

3. A multiport modem according to claim 1 or 2, characterized in that the test configuration code further identifies the bit rate associated with the test command.

4. A multiport modem according to any one of the preceding claims and of the type that includes receiver means (78) for receiving signals from the transmission channel and converting them into a single train of bits, and demultiplexing means (59—64) for demultiplexing said train of bits to form a number of sub-channels equal to the number of active interfaces, in accordance with a multiplexing configuration, characterized in that said demultiplexing means are caused to assume a test configuration in accordance with the test configuration code, and in that the results of the test specified in the test command are provided by the modem at the interface that received the test request.

5. A multiport modem of the type including several input/output interfaces (21A—21D) that can respectively receive the bits of several data sub-channels, receiver means (80) for receiving the signals from a transmission channel and converting them to a single train of bits, and demultiplexing means (85, 92) for demultiplexing said train of bits to form a number of data sub-channels equal to the number of active interfaces and applying same to said active interfaces, in accordance with a multiplexing configuration, characterized in that it includes:

means (83) for storing a test command received from the transmission channel, said command including an indication of the test to be performed, a link level identifier, and, if the latter identifies a link level other than that which includes the modem, a test configuration code identifying one of the interfaces,

means (86, 87) for causing said demultiplexing means to assume, in accordance with the test configuration code, a test configuration such that only the particular interface identified by said configuration code will be active,

decoder means (84) for decoding the link level identifier, and

means (84, 85, 92) for applying the test command to the interface identified by the configuration code if the link level identifier indicates a link level other than that which includes the modem.

6. A multiport modem according to claim 5, characterized in that it includes means (14) for controlling the test specified in the test command if the link level identifier designates the link level that includes the modem.

7. A multiport modem according to claim 5 or 6, characterized in that the test configuration code identifies the bit rate used to apply the test command to the interface identified by the configuration code.

8. A multiport modem according to claim 5 or 7 and of the type that includes multiplexing means (99, 100—103, 113) for multiplexing together the data bits received through the active interfaces so as to form a single train of bits, in accordance with a multiplexing configuration, and transmitter means (117) for sending said single train of bits over the transmission channel, characterized in that said multiplexing means are caused to assume a test configuration in accordance with the test configuration code, and in that the results of the test specified in the test command are received of the test specified in the test command are received at the interface identified in the test configuration code and sent over the transmission channel by said transmitter means.

9. A method of testing a network comprising a first and a second multiport modems communicating with each other through a transmission channel, each of said modems including several input/output interfaces, and each of the interfaces at either multiport modem being associated with one of the interfaces at the other modem, characterized in that it includes the steps of:

applying a test request to one of the interfaces at the first multiport modem,

generating a test configuration code identifying the interface to which the test request has been applied,

causing the first multiport modem, in response to the receipt of the test request by said first multiport modem, to assume a test configuration such that only the particular interface to which the test request has been applied will be active,

applying to the interface which received the test request a test command including an indication of the test to be performed and a link level identifier,

18

decoding the link level identifier,

transmitting to the second multiport modem over the transmission channel the received test command and the test configuration code, if the link level indicated by the link level identifier is not the one which includes the first multiport modem, and, in the second multiport modem, decoding the link level identifier included in the received test command and, if it indicates a link level other than that which includes the second multiport modem, causing the second multiport modem to assume a test configuration such that only the interface associated with the interface which received the test request at the first multiport modem will be active, and applying the test command to said associated interface.

10. A method according to claim 9, characterized in that the test configuration code further identifies the bit rate for the test command.

11. A method of testing a network including a first and a second multiport modems communicating with each other through a transmission channel, the first multiport modem including several input/output interfaces (7A—7D) which can respectively receive the bits of several data sub-channels, multiplexing means (42, 43—46, 56) for multiplexing together the data bits received through those of the interfaces which are active so as to form a first train of bits, in accordance with a multiplexing configuration, and transmitter means (75) for sending said trains of bits over the transmission channel, and the second multiport modem including several input/output interfaces (21A—21D) each of which is associated with one of the interfaces on the first multiport modem, receiver means (80) for receiving signals from the transmission channel and for converting same into a second train of bits, and demultiplexing means (85, 92) for demultiplexing said train of bits to form a number of data subchannel equal to the number of active interfaces and for applying them to its active interfaces, in accordance, with the multiplexing configuration, characterized in that it includes:

in the first multiport modem,

means (36) for detecting a test request from one of the interfaces,

means (30) responsive to the detection of a test request to generate a test configuration code identifying the interface which provided the test request,

means (11) responsive to the test configuration code to cause said multiplexing means to assume a test configuration such that only that interface which received the detected test request will be active,

first storage means (73) for storing a test command received from the interface which received the test request, said command including an indication of the test to be performed and a link level identifier,

first deconder means (74) for decoding the link level identifier, and

means (67, 73) for applying the test command and the test configuration code to said transmitter means to be sent over the transmission channel if the link level identifier indicates a link level other than that which includes said first and second multiport modems,

and in the second multiport modem:

means (83) for storing the test command and the test configuration code received from the transmission channel,

means (86, 87) for causing said demultiplexing means to assume, in accordance with the received test configuration code, a test configuration such that only the interface associated with the interface which received the test request at the first multiport modem will be active, and

means (84, 85, 92) for applying the test command to said active interface if the link level identifier indicates a link level other than that which includes said first and second multiport modems.

12. A system according to claim 11 and in which the second multiport modem includes multiplexing means (99, 100—103, 113) for multiplexing together the data bits received through the active interfaces to form a single train of bits, in accordance with a multiplexing configuration, and transmitter means (117) for sending said single train of bits over the transmission channel, characterized in that the multiplexing means are caused to assume a test configuration in accordance with the test configuration code, and in that the results of the test specified in the test command are received at the interface identified by the test configuration code and sent over the transmission channel by said transmitter means.

13. A system according to claim 11, characterized in that it includes means (9, 14) for controlling the test specified in the test command if the link level indicated by the link level identifier includes the first and second multiport modems.

14. A system according to any one of claims 11 to 13, characterized in that the configuration code identifies the bit rate associated with the test command.

19

FIG. 1

FIG. 2A

O O53 212

2

FIG.2B

0 053 212

# FIG.3A

DE 12

VERS 12

RD'

RT'

RTA'
RTB'
RTC'
RTD'

CD'

TI'

TD'

TTM'

RTS'

RFS'

RFSO

FIG.3B

# FIG.3C

# FIG. 4

# FIG. 5

# FIG.6

FIG. 6

| Q4 | Q3 | Q2 | Q1 |

TD

TTM

# FIG. 7

| | | | |

RD

RT

RTA
RTB
RTC
RTD

# FIG.8

# FIG.9